# EUROPÄISCHE PATENTSCHRIFT

(11) **EP 3 551 558 B1**
(45) Veröffentlichungstag und Bekanntmachung des Hinweises auf die Patenterteilung: **29.07.2020**
(21) Anmeldenummer: 18712833.5
(22) Anmeldetag: 14.03.2018
(51) Int. Cl.: B65G 54/02, B61B 13/04, H02K 41/02

(54) **LINEARTRANSPORTSYSTEM**
LINEAR TRANSPORT SYSTEM
SYSTÈME DE TRANSPORT LINÉAIRE

(30) Priorität: 21.04.2017 DE 102017108572
(43) Veröffentlichungstag der Anmeldung: 16.10.2019
(73) Patentinhaber: Beckhoff Automation GmbH, 33415 Verl (DE)
(72) Erfinder: NEUFELD, Jörg, 33104 Paderborn (DE); PRÜSSMEIER, Uwe, 32657 Lemgo (DE)
(74) Vertreter: Patentanwaltskanzlei WILHELM & BECK
(86) Internationale Anmeldenummer: PCT/EP2018/056363
(87) Internationale Veröffentlichungsnummer: WO 2018/192721

(56) Entgegenhaltungen:
- EP-A1- 0 636 561
- EP-A1- 2 460 445
- WO-A1-98/13283
- DE-A1-102013 216 958
- US-A- 5 018 928
- US-A1- 2016 031 648

## Beschreibung

Die Erfindung betrifft ein Lineartransportsystem gemäß Patentanspruch 1.

Aus der EP 0 636 561 A1, EP 2 460 445 A1, US 5 018 928 A, DE 10 2013 216 958 A1, US 8,132,330 B2, US 2009/0095192 A1, US 5,915,840, US 4,884,898 und EP 0 577 995 A2 sind unterschiedlich ausgebildete Transportvorrichtungen bekannt.

Ferner ist aus der EP 2 560 904 B1 eine Transportvorrichtung zur Beförderung eines Produkts bekannt, wobei die Transportvorrichtung eine Vielzahl von unabhängig voneinander bewegbaren Förderelementen zum Fördern von Produkten, eine ortsfeste, umlaufend angeordnete Laufschiene, welche einen Laufpfad mit wenigstens einer Laufbahn für das Förderelement definiert und eine Linearmotorantriebsvorrichtung zum Antreiben der Förderelemente umfasst, wobei jedes Förderelement Permanentmagnete aufweist, die mit Spulen der Linearantriebsvorrichtung in Wirkverbindung stehen und wobei jedes Förderelement wenigstens ein erstes Teilelement und ein zweites Teilelement aufweist, welche mittels Gelenke gelenkig miteinander verbunden sind. Jedes Förderelement weist einen modularen Aufbau auf und die einzelnen Teilelemente weisen einen gleichen Grundaufbau auf. Eine Gelenkachse eines jeden Gelenks ist parallel zur Laufbahn angeordnet.

Die EP 0 636 561 A1 offenbart ein Lineartransportsystem nach dem Oberbegriff des Anspruchs 1.

Es ist Aufgabe der Erfindung, ein verbessertes Lineartransportsystem bereitzustellen.

Diese Aufgabe wird mittels eines Lineartransportsystems gemäß Patentanspruch 1 gelöst. Vorteilhafte Ausführungsformen sind in den abhängigen Ansprüchen angegeben.

Es wurde erkannt, dass ein verbessertes Lineartransportsystem zur Förderung eines Objekts dadurch bereitgestellt werden kann, dass das Lineartransportsystem wenigstens eine ortsfeste Laufschiene und wenigstens eine bewegbare Fördereinrichtung umfasst, wobei die Fördereinrichtung eine erste Führungseinheit mit einer ersten Laufrolle, einer zweiten Laufrolle und einem ersten Drehschemel umfasst, wobei an dem ersten Drehschemel die erste Laufrolle und die zweite Laufrolle drehbar gelagert sind und an der Laufschiene anliegen, wobei die Laufschiene eine in Längsrichtung verlaufende Schienenlängsachse aufweist, wobei der erste Drehschemel drehbar um eine Drehschemelachse gelagert ist, wobei die Drehschemelachse geneigt, insbesondere senkrecht zu der Schienenlängsachse angeordnet ist.

Diese Ausgestaltung hat den Vorteil, dass eine zuverlässige Führung der Fördereinrichtung auch bei engen Kurvenradien an der Laufschiene sichergestellt ist. Ferner wird ein Verkanten der Führungseinrichtung an der Laufschiene vermieden.

Erfindungsgemäß weist die erste Führungseinheit einen zweiten Drehschemel, eine dritte Laufrolle und eine vierte Laufrolle auf, wobei an dem zweiten Drehschemel die dritte Laufrolle und die vierte Laufrolle drehbar gelagert sind und an der Laufschiene anliegen, wobei die Laufschiene zwischen dem ersten Drehschemel und dem zweiten Drehschemel angeordnet ist, wobei der zweite Drehschemel gegenüberliegend zu dem ersten Drehschemel angeordnet ist und drehbar um eine weitere Drehschemelachse gelagert ist, wobei sich die Laufrollen beidseitig der Laufschiene abstützen, wobei die weitere Drehschemelachse geneigt, vorzugsweise senkrecht, zu der Schienenlängsachse angeordnet ist, wobei vorzugsweise die Drehschemelachse und die weitere Drehschemelachse parallel ausgerichtet sind.

In einer weiteren Ausführungsform sind die erste Laufrolle bis vierte Laufrolle gemeinsam in einer X-Anordnung an der Laufschiene angeordnet.

In einer weiteren Ausführungsform ist die Drehschemelachse geneigt zu der ersten Drehachse und/oder der zweiten Drehachse angeordnet, wobei die Drehschemelachse und die erste Drehachse und/oder die zweite Drehachse in einer gemeinsamen Ebene angeordnet sind.

In einer weiteren Ausführungsform umfasst die erste Führungseinheit einen Drehschemelverbindungsabschnitt, wobei der Drehschemelverbindungsabschnitt an der Laufschiene vorbeigeführt ist und den ersten Drehschemel mit dem zweiten Drehschemel derart koppelt, dass sich die Drehschemelachse und die weitere Drehschemelachse überlappen, wobei vorzugsweise der Drehschemelverbindungsabschnitt, der erste Drehschemel und der zweite Drehschemel einstückig und materialeinheitlich ausgebildet sind. Dadurch kann die Fördereinrichtung besonders schwere Lasten tragen.

In einer weiteren Ausführungsform weist die Laufschiene eine erste Schienenlauffläche, eine zweite Schienenlauffläche, eine dritte Schienenlauffläche und eine vierte Schienenlauffläche auf, wobei die erste Schienenlauffläche schräg geneigt zu der zweiten Schienenlauffläche angeordnet ist, wobei die erste Schienenlauffläche und die zweite Schienenlauffläche voneinander abgewandt sind, wobei die erste Laufrolle auf der ersten Schienenlauffläche und die zweite Laufrolle auf der zweiten Schienenlauffläche abrollen, wobei auf der dritten Schienenlauffläche die dritte Laufrolle und auf der vierten Schienenlauffläche die vierte Laufrolle abrollen, wobei die dritte Schienenlauffläche schräg geneigt zu der vierten Schienenlauffläche angeordnet ist, wobei die dritte Schienenlauffläche und die vierte Schienenlauffläche voneinander abgewandt sind, wobei die dritte Schienenlauffläche auf einer zur ersten Schienenlauffläche gegenüberliegenden Seite der Laufschiene angeordnet ist, wobei die vierte Schienenlauffläche auf einer zur zweiten Schienenlauffläche gegenüberliegenden Seite angeordnet ist. Dadurch kann die Laufschiene besonders kompakt ausgebildet sein.

In einer weiteren Ausführungsform weisen die Laufrollen umfangsseitig jeweils eine Lauffläche auf, wobei die Laufrollen jeweils eine Berührlinie mit der zugeordneten Schienenlauffläche aufweisen, wobei jeweils die Schienenlaufflächen derart an der Laufschiene angeordnet sind, dass die Berührlinien jeweils seitlich beabstandet zu einer Schienenlängsachse der Laufschiene verlaufen, wobei vorzugsweise die Berührlinien gemeinsam in einer Ebene angeordnet sind, wobei die Schienenlängsachse vorzugsweise senkrecht zu der Ebene angeordnet ist. Dadurch kann ein Drehmoment aus der Fördereinrichtung über die Laufschiene besonders gut abgestützt werden.

In einer weiteren Ausführungsform sind die erste Schienenlauffläche und die zweite Schienenlauffläche auf einer ersten Seite der Laufschiene und die dritte Schienenlauffläche und die vierte Schienenlauffläche auf einer zur ersten Seite gegenüberliegenden zweiten Seite der Laufschiene angeordnet, wobei die erste Schienenlauffläche und die vierte Schienenlauffläche parallel zueinander ausgerichtet sind und/oder wobei die zweite Schienenlauffläche und die dritte Schienenlauffläche parallel zueinander ausgerichtet sind. Diese Ausgestaltung hat ferner den Vorteil, dass die Laufschiene ein besonders hohes Trägheitstorsionsmoment aufweist, das zum einen durch Einschnitte in die Laufschiene nicht geschwächt ist und zum anderen können durch diese Ausgestaltung besonders hohe Drehmomente aus der Fördereinrichtung über die Laufrollen in die Laufschiene abgestützt werden und somit ist das Lineartransportsystem geeignet, besonders schwere Lasten auch bei einer außermittigen Anordnung an der Fördereinrichtung zu transportieren.

In einer weiteren Ausführungsform weist die Fördereinrichtung ein Spannmittel auf, wobei das Spannmittel ausgebildet ist, eine Spannkraft bereitzustellen. Mittels der Spannkraft werden die erste Laufrolle und die zweite Laufrolle an die Laufschiene gedrückt. Dadurch wird sichergestellt, dass die Fördereinrichtung spielfrei unabhängig vom Verlauf der Laufschiene läuft und gleichzeitig auch ein Verschleißausgleich für einen Verschleiß der Laufrollen sichergestellt werden kann.

In einer weiteren Ausführungsform weist der erste Drehschemel einen ersten Drehschemelabschnitt, einen zweiten Drehschemelabschnitt und einen dritten Drehschemelabschnitt auf. An dem ersten Drehschemelabschnitt ist die erste Laufrolle drehbar um eine erste Drehachse und an dem zweiten Drehschemelabschnitt ist die zweite Laufrolle drehbar um eine zweite Drehachse gelagert. Der dritte Drehschemelabschnitt ist zwischen dem ersten Drehschemelabschnitt und dem zweiten Drehschemelabschnitt angeordnet und verbindet den ersten Drehschemelabschnitt mit dem zweiten Drehschemelabschnitt. Der erste Drehschemelabschnitt und der zweite Drehschemelabschnitt sind geneigt zueinander angeordnet und erstrecken sich auf einer gemeinsamen Seite des dritten Drehschemelabschnitts.

Erfindungsgemäß weist die erste Führungseinheit einen zweiten Drehschemel mit wenigstens einer dritten Laufrolle und wenigstens einer vierten Laufrolle auf, wobei die dritte Laufrolle und die vierte Laufrolle an dem zweiten Drehschemel drehbar gelagert sind. Der zweite Drehschemel ist gegenüberliegend zu dem ersten Drehschemel angeordnet. Dadurch kann eine zuverlässige Führung, insbesondere ein Kippen, der Fördereinrichtung um die Schienenlängsachse erreicht werden.

In einer weiteren Ausführungsform sind der erste Drehschemel und der zweite Drehschemel mittels eines Drehschemelverbindungsabschnitts verbunden, wobei vorzugsweise der Drehschemelverbindungsabschnitt, der erste Drehschemel und der zweite Drehschemel einstückig und materialeinheitlich ausgebildet sind. Dadurch können besonders hohe Kräfte aus der Fördereinrichtung auch bei engen Kurvenradien der Laufschiene abgestützt werden.

In einer weiteren Ausführungsform umfasst die Fördereinrichtung eine zweite Führungseinheit und eine Koppeleinheit, wobei die erste Führungseinheit und die zweite Führungseinheit identisch ausgebildet sind, wobei die Koppeleinheit die erste Führungseinheit mit der zweiten Führungseinheit mechanisch koppelt. Dadurch kann ein eine Drehbewegung der Fördereinrichtung um eine Querachse zuverlässig vermieden werden, sodass die Fördereinrichtung mittels der Laufschiene besonders stabil geführt wird.

In einer weiteren Ausführungsform weist das Lineartransportsystem eine Antriebseinrichtung auf, wobei die Antriebseinrichtung einen Linearmotor mit einem Stator, eine Magnetanordnung und ein Steuergerät umfasst, wobei der Stator eine Vielzahl von getrennt bestrombaren Spulen umfasst, wobei die Magnetanordnung mit der ersten Führungseinheit gekoppelt ist, wobei die Spulen elektrisch mit dem Steuergerät verbunden sind, wobei das Steuergerät ausgebildet ist, eine definierte Anzahl der Spulen derart zu steuern, dass die definierte Anzahl von Spulen ein magnetisches Wanderfeld zur magnetischen Kopplung der Magnetanordnung mit dem Stator bereitstellen, um die Fördereinrichtung zu bewegen. Die Spulen sind versetzt zu der Laufschiene und die Magnetanordnung ist versetzt zu dem Drehschemel angeordnet. Die Laufschiene führt die Fördereinrichtung in ihrer Bewegung.

Nachfolgend wird die Erfindung anhand von Figuren näher erläutert. Dabei zeigen:
Figur 1 eine perspektivische Darstellung eines Lineartransportsystems gemäß einer ersten Ausführungsform;
Figur 2 einen vergrößerten Ausschnitt A des in Figur 1 gezeigten Lineartransportsystems;
Figur 3 eine Schnittansicht entlang einer in Figur 2 gezeigten Schnittebene A-A durch das Lineartransportsystem;
Figur 4 eine weitere Schnittansicht entlang der in Figur 2 gezeigten Schnittebene A-A durch das in Figur 2 gezeigte Lineartransportsystem;
Figur 5 einen vergrößerten Ausschnitt B der in Figur 3 gezeigten Schnittansicht;
Figur 6 eine Schnittansicht entlang einer in Figur 2 gezeigten Schnittebene B-B durch das in Figur 2 gezeigte Lineartransportsystem;
Figur 7 eine Schnittansicht entlang der in Figur 2 gezeigten Schnittebene A-A durch ein Lineartransportsystem gemäß einer zweiten Ausführungsform;
Figur 8 eine perspektivische Darstellung eines Lineartransportsystems gemäß einer dritten Ausführungsform;
Figur 9 einen vergrößerten Ausschnitt C des in Figur 8 gezeigten Lineartransportsystems;
Figur 10 einen nochmals vergrößerten Ausschnitt C des in Figur 8 gezeigten Lineartransportsystems;
Figur 11 eine Schnittansicht entlang der in Figur 9 gezeigten Schnittebene C-C durch das in Figur 9 gezeigte Lineartransportsystem;
Figur 12 einen Querschnitt entlang einer in Figur 9 gezeigten Schnittebene C-C durch das in Figur 9 gezeigte Lineartransportsystem; und
Figur 13 einen vergrößerten Ausschnitt D des in Figur 8 gezeigten Lineartransportsystem.

In den nachfolgenden Figuren wird auf ein Koordinatensystem 5 Bezug genommen. Das Koordinatensystem 5 ist als Rechtssystem ausgebildet und weist eine x-Achse (Längsrichtung), eine y-Achse (Querrichtung) und eine z-Achse (Höhenrichtung) auf. Das Koordinatensystem 5 kann auch andersartig ausgebildet sein und dient zur erleichterten Erläuterung der nachfolgenden Figuren.

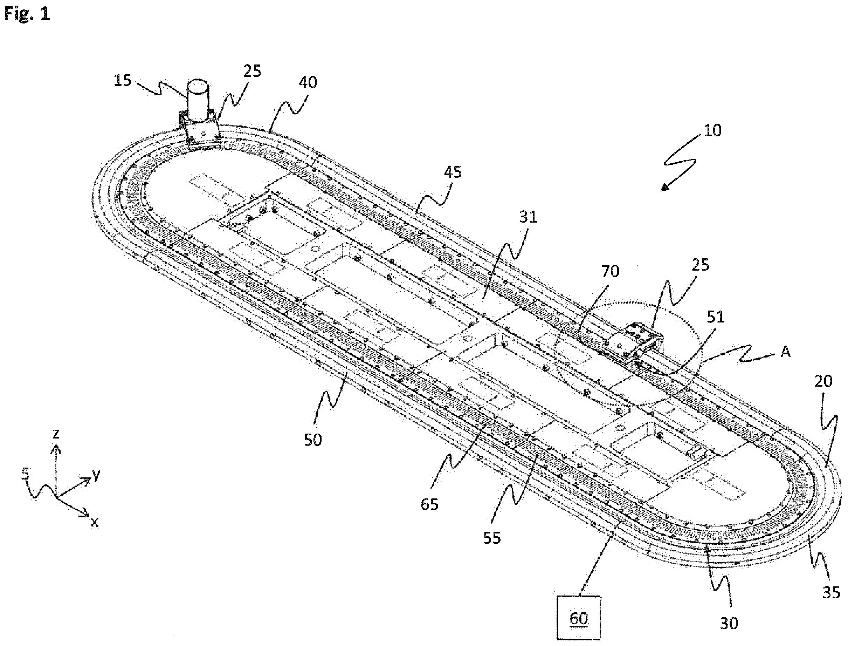

Figur 1 zeigt eine perspektivische Darstellung eines Lineartransportsystems 10.

Das Lineartransportsystem 10 umfasst eine ortsfeste Laufschiene 20, wenigstens eine Fördereinrichtung 25 und eine Antriebseinrichtung 30 mit wenigstens einem Antriebsmodul 31. In der Ausführungsform weist das Lineartransportsystem 10 eine Mehrzahl von identisch ausgebildeten Fördereinrichtungen 25 und eine Mehrzahl von Antriebsmodulen 31 auf, wobei die Fördereinrichtungen 25 beispielsweise beabstandet zueinander an der Laufschiene 20 angeordnet sind. Die Anzahl der Fördereinrichtungen 25 und Antriebsmodule 31 ist hierbei beliebig. Jede der Fördereinrichtungen 25 kann hierbei unabhängig von der anderen Fördereinrichtung 25 bewegt werden. Die Fördereinrichtung 25 transportiert beispielsweise ein Objekt 15 zwischen zwei Stationen.

In Figur 1 weist die Laufschiene 20 einen ersten Bogenabschnitt 35, einen zweiten Bogenabschnitt 40, einen ersten Geradabschnitt 45 und einen zweiten Geradabschnitt 50 auf. Die Geradabschnitte 45, 50 sind zwischen den Bogenabschnitten 35, 40 angeordnet und verbinden die jeweiligen Enden der Bogenabschnitte 35, 40 miteinander.

Die Antriebseinrichtung 30 weist einen Linearmotor 51 mit einem Stator 55, einer Magnetanordnung 70 und einem Steuergerät 60 auf. Der Stator 55 umfasst eine Vielzahl von getrennt voneinander bestrombaren Spulen 65. In der Ausführungsform sind mehrere Spulen 65 in dem Antriebsmodul 31 nebeneinander angeordnet. Das Steuergerät 60 ist mit Stator 55 elektrisch verbunden. Jedes Antriebsmodul 31 ist mit der Laufschiene 20 verbunden. Dabei sind die Spulen 65 in einer Reihe parallel verlaufend zu der Laufschiene 20 angeordnet.

Die Magnetanordnung 70 ist an der Fördereinrichtung 20 angeordnet. Die Magnetanordnung 70 ist jeweils seitlich des Stators 55 angeordnet.

Das Steuergerät 60 ist ausgebildet einen Spulenstrom durch eine vordefinierte Anzahl von Spulen 65, also einen Stromfluss durch die vordefinierte Anzahl von Spulen 65, zu variieren. Der Spulenstrom erzeugt ein magnetisches Wanderfeld, das mit der Magnetanordnung 70 wechselwirkt.

Das Steuergerät 60 ist dazu ausgebildet, die Bewegung der Fördereinrichtung 25 entlang der Laufschiene 20 zu steuern. Dabei steuert bzw. regelt das Steuergerät 60 die Spulenströme durch die Spulen 65 derart, dass über die Wechselwirkung der Magnetanordnung 70 mit dem durch die Spulenströme erzeugten magnetischen Wanderfeld eine entlang bzw. längs des Antriebsmoduls 31 gerichtete Kraft auf die Fördereinrichtung 20 ausgeübt wird.

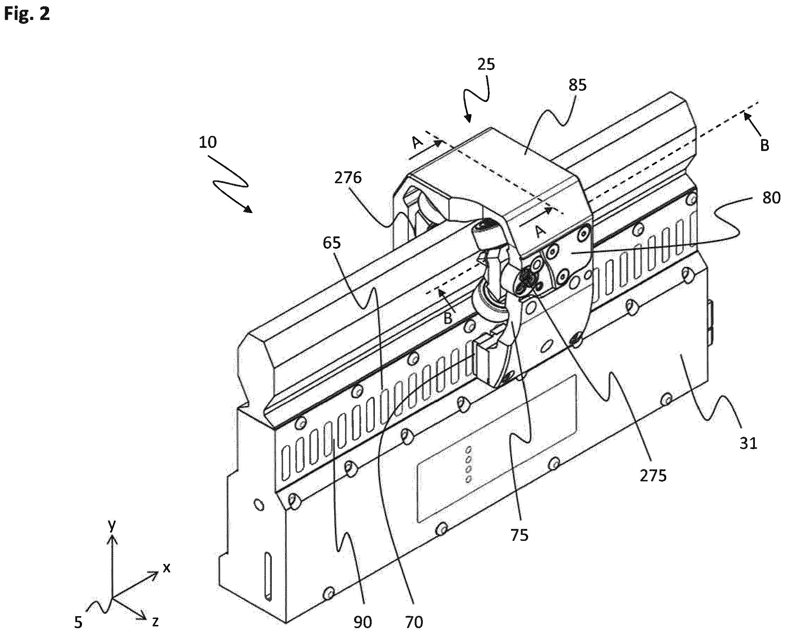

Figur 2 zeigt einen vergrößerten Ausschnitt A auf das in Figur 1 gezeigte Lineartransportsystem 10 in einer zum Betrachter hin gekippten Lage.

Die Fördereinrichtung 25 weist eine erste Führungseinheit 75, eine zweite Führungseinheit 80 und eine Koppeleinheit 85 auf. Dabei ist in Längsrichtung die erste Führungseinheit 75 beabstandet zu der zweiten Führungseinheit 80 angeordnet. Die erste Führungseinheit 75 wird mittels der Koppeleinheit 85 mechanisch mit der zweiten Führungseinheit 80 gekoppelt. Ferner ist in Querrichtung versetzt zu der Führungseinheit 75, 80 die Magnetanordnung 70 seitlich der Spulen 65 an der Koppeleinheit 85 angeordnet. Dabei weist die Magnetanordnung 70 einen geringen Abstand zu einer Statorseitenfläche 90 des Stators 55 auf, um einen Berührkontakt einerseits zwischen der Fördereinrichtung 25 und der Statorseitenfläche 90 zu vermeiden und andererseits einen Spalt im magnetischen Fluss zwischen dem permanenten Magnetfeld und dem Wanderfeld gering zu halten.

Die Koppeleinheit 85 ist C-förmig oder U-förmig ausgebildet. Die Koppeleinheit 85 umgreift die Laufschiene 20 umfangsseitig und trägt an dem freien Ende die Magnetanordnung 70. Zusätzlich kann an der Koppeleinheit 85 ein Signalgeber für eine Positionsermittlungseinrichtung angeordnet sein.

Die Laufschiene 20 ist in Querrichtung an dem Antriebsmodul 31 befestigt. Gegenüberliegend zur Laufschiene 20 ist das Antriebsmodul 31 an einem hier nicht dargestellten Maschinenbett befestigt.

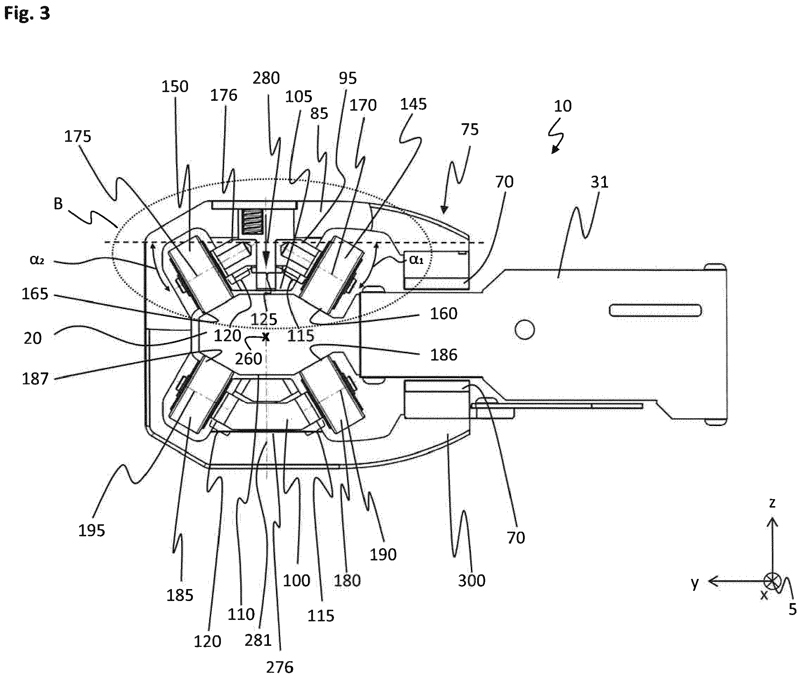

Figur 3 zeigt eine Schnittansicht entlang einer in Figur 2 gezeigten Schnittebene A-A durch das Lineartransportsystem 10, wobei zur besseren Übersicht auf eine Schraffur der Schnittflächen verzichtet wurde.

Die erste Führungseinheit 75 weist einen ersten Drehschemel 95 und einen zweiten Drehschemel 100 auf. Der erste Drehschemel 95 ist oberhalb einer Oberseite 105 der Laufschiene 20 angeordnet. Der zweite Drehschemel 100 ist unterhalb einer Unterseite 110 der Laufschiene 20 angeordnet.

Der erste Drehschemel 95 ist gabelförmig ausgebildet und weist einen ersten Drehschemelabschnitt 115 und einen in Querrichtung versetzt zum ersten Drehschemelabschnitt 115 angeordneten zweiten Drehschemelabschnitt 120 auf. Ein dritter Drehschemelabschnitt 125 des ersten Drehschemels 95 ist in Querrichtung zwischen dem ersten Drehschemelabschnitt 115 und dem zweiten Drehschemelabschnitt 120 angeordnet. Der dritte Drehschemelabschnitt 125 ist parallel zur y-Achse ausgerichtet. Der erste Drehschemelabschnitt 115 ist gegenüber dem dritten Drehschemelabschnitt 125 um einen ersten Winkel α₁ um die Längsachse verkippt in Richtung der Laufschiene 20 angeordnet. Der zweite Drehschemelabschnitt 120 ist um einen zweiten Winkel α₂ um die Längsachse gegenüber dem dritten Drehschemelabschnitt 125 verkippt in Richtung der Laufschiene 20 angeordnet. Von besonderem Vorteil ist, wenn der erste Winkel α identisch mit dem zweiten Winkel α₂ ist und/oder wobei der erste Winkel α₁ und/oder der zweite Winkel α₁ ein spitzer Winkel sind.

Der erste Drehschemelabschnitt 115 und der zweite Drehschemelabschnitt 120 befinden sich gemeinsam auf einer der Laufschiene 20 zugewandten Seite des dritten Drehschemelabschnitts 125. Die erste Führungseinheit 75 umfasst ferner eine erste Laufrolle 145 und eine zweite Laufrolle 150. Die erste Laufrolle 145 ist drehbar um eine erste Drehachse 170 am ersten Drehschemelabschnitt 115 gelagert. Die erste Laufrolle 145 weist umfangsseitig eine erste Lauffläche 160 auf. Die erste Lauffläche 160 ist auf einer Kreisbahn um die erste Drehachse 170 verlaufend angeordnet und kann ballig ausgebildet sein.

Die zweite Laufrolle 150 ist drehbar um eine zweite Drehachse 175 am zweiten Drehschemelabschnitt 120 gelagert. Die erste und zweite Drehachse 170, 175 sind fluchtend zu dem ersten und zweiten Drehschemelabschnitt 115, 120 ausgerichtet. Die zweite Laufrolle 150 weist umfangsseitig eine zweite Lauffläche 165 auf. Die zweite Lauffläche 165 ist auf einer Kreisbahn um die zweite Drehachse 175 verlaufend angeordnet.

Die erste Lauffläche 160 ist um den ersten Winkel α₁ gegenüber dem dritten Drehschemelabschnitt 125 schräg geneigt angeordnet. Die zweite Lauffläche 165 ist um den zweiten Winkel α₂ gegenüber dem dritten Drehschemelabschnitt 125 schräg geneigt angeordnet.

Der erste Drehschemel 95 ist um eine erste Drehschemelachse 280 drehbar an der Koppeleinheit 85 gelagert. Die erste Drehschemelachse 280 ist senkrecht zum dritten Drehschemelabschnitt 125 angeordnet und verläuft parallel zur z-Achse. Die erste Drehschemelachse 280 ist ferner geneigt, vorzugsweise senkrecht zur Schienenlängsachse 260 angeordnet, die in der dargestellten Ausführungsform entlang der X-Achse verläuft. Von besonderem Vorteil ist hierbei, wenn eine Neigung der ersten Drehschemelachse 280 aus der Senkrechten zu der Schienenlängsachse 260 geringer als 10° ist.

Die erste Drehschemelachse 280, die erste Drehachse 170 und die zweite Drehachse 175 sind in einer gemeinsamen Ebene angeordnet. Die Schienenlängsachse 260 ist senkrecht zu der Ebene angeordnet.

Der zweite Drehschemel 100 ist identisch zu dem ersten Drehschemel 95 ausgebildet, wobei der zweite Drehschemel 100 um eine zweite Drehschemelachse 281 drehbar an der Koppeleinheit 85 gelagert ist. Beispielsweise überlappen sich die erste Drehschemelachse 280 und die zweite Drehschemelachse 281 und erstrecken sich beispielsweise parallel zur z-Achse.

Die erste Führungseinheit 75 umfasst zusätzlich zur ersten und zweiten Laufrolle 145, 150 beispielsweise eine dritte Laufrolle 180 und eine vierte Laufrolle 185. Die dritte und vierte Laufrolle 180, 185 sind beispielsweise identisch zu der ersten und zweiten Laufrolle 145, 150 ausgebildet. Dabei ist die dritte Laufrolle 180 drehbar um eine dritte Drehachse 190 an dem ersten Drehschemelabschnitt 115 des zweiten Drehschemels 100 und die vierte Laufrolle 185 drehbar um eine vierte Drehachse 195 am zweiten Drehschemelabschnitt 120 des zweiten Drehschemels 100 gelagert.

Dabei ist in der Ausführungsform die vierte Drehachse 195 parallel zur ersten Drehachse 170 und die zweite Drehachse 175 parallel zur dritten Drehachse 190 angeordnet. Dabei ist in z-Richtung unterhalb der ersten Laufrolle 145 die dritte Laufrolle 180 und in z-Richtung, also senkrecht unterhalb der zweiten Laufrolle 150, die vierte Laufrolle 185 angeordnet.

Die dritte Laufrolle 180 weist umfangsseitig eine dritte Lauffläche 186 auf. Die dritte Lauffläche 186 ist auf einer Kreisbahn um die dritte Drehachse 190 verlaufend angeordnet. Die vierte Laufrolle 185 weist umfangsseitig eine vierte Lauffläche 187 auf. Die vierte Lauffläche 187 ist auf einer Kreisbahn um die vierte Drehachse 195 verlaufend angeordnet.

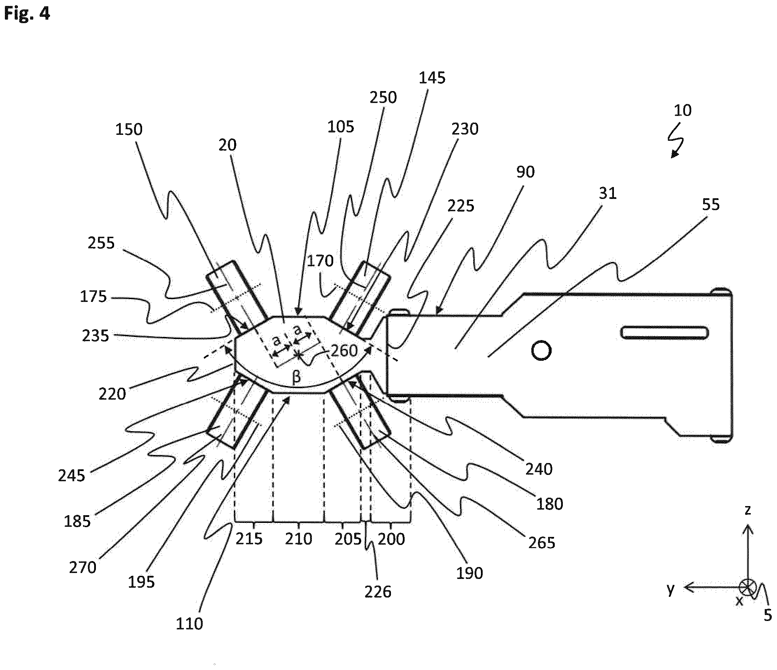

Figur 4 zeigt eine weitere Schnittansicht entlang der in Figur 2 gezeigten Schnittebene A-A durch das in Figur 2 gezeigte Lineartransportsystem 10, wobei zur besseren Übersicht auf eine Schraffur der Schnittflächen verzichtet wurde. Zur vereinfachten Darstellung sind von der Fördereinrichtung 25 ausschließlich die Laufrollen 145, 150, 180, 185 dargestellt.

Die Laufschiene 20 weist einen Befestigungsabschnitt 200, einen ersten Führungsabschnitt 205, einen Verbindungsabschnitt 210 und einen zweiten Führungsabschnitt 215 auf.

Der zweite Führungsabschnitt 215 grenzt an ein freies Ende 220 der Laufschiene 20 an. Angrenzend an ein festes Ende 225 der Laufschiene 20 ist der Befestigungsabschnitt 200 angeordnet. Mittels des Befestigungsabschnitts 200 ist die Laufschiene 20 mit dem Antriebsmodul 31 des Lineartransportsystems 10 verbunden. Der Befestigungsabschnitt 200 verjüngt sich hin zum freien Ende 220 der Laufschiene 20. Zusätzlich kann zwischen dem Befestigungsabschnitt 200 und dem ersten Führungsabschnitt 205 ein weiterer Verbindungsabschnitt 226 angeordnet sein. Der weitere Verbindungsabschnitt 226 weist eine konstante Höhe auf. An den weiteren Verbindungsabschnitt 226 grenzt auf einer dem Befestigungsabschnitt 200 abgewandten Seite der erste Führungsabschnitt 205 an. Der erste Führungsabschnitt 205 grenzt auf einer dem weiteren Verbindungsabschnitt 226 abgewandten Seite an den Verbindungsabschnitt 210 an.

In z-Richtung weist der Verbindungsabschnitt 210 eine konstante Höhe auf und ist im Querschnitt rechteckförmig ausgebildet. Der Verbindungsabschnitt 210 ist in z-Richtung dicker ausgebildet als der weitere Verbindungsabschnitt 226. Der Verbindungsabschnitt 210 ist in Querrichtung zwischen dem ersten Führungsabschnitt 205 und dem zweiten Führungsabschnitt 215 angeordnet. Ferner sind die Statorseitenfläche 90 und der Verbindungsabschnitt 210 parallel zueinander angeordnet.

Der erste Führungsabschnitt 205 weist an der Oberseite 105 der Laufschiene 20 eine erste Schienenlauffläche 230 auf. Die erste Schienenlauffläche 230 ist schräg geneigt zu der y-Achse angeordnet. Dabei ist die erste Schienenlauffläche 230 derart angeordnet, dass vom Befestigungsabschnitt 200 hin zum Verbindungsabschnitt 210 (in Richtung des freien Endes 220) sich der erste Führungsabschnitt 205 verbreitert.

Der zweite Führungsabschnitt 215 verjüngt sich vom Verbindungsabschnitt 210 hin zum freien Ende 220. Am freien Ende 220 ist der zweite Führungsabschnitt 215 stumpf ausgebildet. Der zweite Führungsabschnitt 215 weist an der Oberseite 105 eine zweite Schienenlauffläche 235 auf. Die zweite Schienenlauffläche 235 ist (vorzugsweise schräg) geneigt zu dem Verbindungsabschnitt 210 angeordnet. Die Führungsschiene 20 weist einen dritten Winkel β zwischen der ersten Schienenlauffläche 230 und der zweiten Schienenlauffläche 235 auf. Der dritte Winkel β ist als stumpfer Winkel ausgebildet.

Ferner umfasst der erste Führungsabschnitt 205 eine an der Unterseite 110 angeordnete dritte Schienenlauffläche 240. Die dritte Schienenlauffläche 240 ist in z-Richtung unterhalb der ersten Schienenlauffläche 230 angeordnet. Die erste Schienenlauffläche 230 und die dritte Schienenlauffläche 240 sind in eine dem Stator 55 zugewandte Richtung geneigt.

Der zweite Führungsabschnitt 215 weist an der Unterseite 110 eine vierte Schienenlauffläche 245 auf, die in z-Richtung unterseitig der zweiten Schienenlauffläche 235 angeordnet ist. Die zweite Schienenlauffläche 235 und die vierte Schienenlauffläche 245 sind in eine der ersten Schienenlauffläche 230 und dritten Schienenlauffläche 240 abgewandte Richtung geneigt. Die Schienenlaufflächen 230, 235, 240, 245 weisen eine identische Breite auf.

In der Ausführungsform sind die erste Schienenlauffläche 230 und die vierte Schienenlauffläche 245 parallel zueinander ausgerichtet. Ebenso sind die zweite Schienenlauffläche 235 und die vierte Schienenlauffläche 245 parallel zueinander angeordnet. Dadurch weist die Laufschiene 20 eine im Wesentlichen rautenförmige Grundform auf, die durch den Verbindungsabschnitt 205 oberseitig und unterseitig abgeflacht ist.

Auf der ersten Schienenlauffläche 230 liegt die erste Laufrolle 145, auf der zweiten Schienenlauffläche 235 liegt die zweite Laufrolle 150, auf der dritten Schienenlauffläche 240 liegt die dritte Laufrolle 180 und auf der vierten Schienenlauffläche 245 liegt die vierte Laufrolle 185 umfangsseitig auf.

Die erste Laufrolle 145 rollt an der ersten Schienenlauffläche 230 entlang einer ersten Berührlinie 250 ab, die in einer Drehebene senkrecht zur ersten Drehachse 170 verläuft. Ebenso rollen die zweite bis vierte Laufrolle 150, 180, 185 auf der jeweiligen zweiten bis vierten Schienenlauffläche 235, 240, 245 entlang einer korrespondierenden zweiten bis vierten Berührlinie 255, 265, 270 ab, die jeweils in einer Drehebene senkrecht zur zweiten bis vierten Drehachse 175, 190, 195 der korrespondierenden zweiten bis vierten Laufrolle 150, 180, 185 verläuft. Die Berührlinien 250, 255, 265, 270 sind in einer gemeinsamen weiteren Ebene angeordnet. Die Ebene in der die Drehachsen 170, 175, 190, 195 angeordnet sind und die weitere Ebene können identisch sein. Auch die weitere Ebene ist senkrecht zu der Schienenmittelachse 260 ausgerichtet.

Die erste Laufrolle 145 und die zweite Laufrolle 150 sind in einer V-Anordnung angeordnet. Dabei wird unter einer V-Anordnung verstanden, dass die erste Berührlinie 250 und die zweite Berührlinie 255 auf einer der Laufschiene 20 zugewandten Seite der ersten und zweiten Laufrolle 145, 150 aufeinander zulaufen.

Ebenso sind die dritte und vierte Laufrolle 180, 185 in einer V-Anordnung drehbar gelagert. Auch laufen die dritte Berührlinie 265 und die vierte Berührlinie 270 auf der der Laufschiene 20 zugewandten Seite der dritten und vierten Laufrolle 180, 185 aufeinander zu. Dadurch ergibt sich, dass die Laufrollen 145, 150, 180, 185 in einer X-Anordnung angeordnet sind. Dabei wird unter einer X-Anordnung verstanden, dass die Berührlinien 250, 255, 265, 270 auf der der Laufschiene 20 zugewandten Seite aufeinander zulaufen. Dabei können sich die Berührlinien 250, 255, 265, 270 an der Schienenlängsachse 260 der Laufschiene 20 schneiden oder es können die Berührlinien 250, 255, 265, 270, wie in Figur 4 gezeigt, in einem vordefinierten minimalen Abstand a an der Schienenlängsachse 260 seitlich versetzt in der weiteren Ebene vorbeilaufen.

Dabei ist von besonderem Vorteil, wenn die Berührlinien 250, 255, 265, 270 alle den jeweils gleichen vordefinierten minimalen Abstand a zu der Schienenlängsachse 260 der Laufschiene 20 aufweisen. Dadurch wird ein Verkippen der Fördereinrichtung 25 in der Bewegung entlang der Laufschiene 20 (in Figur 4 entlang der Längsrichtung) um die Schienenlängsachse 260 vermieden.

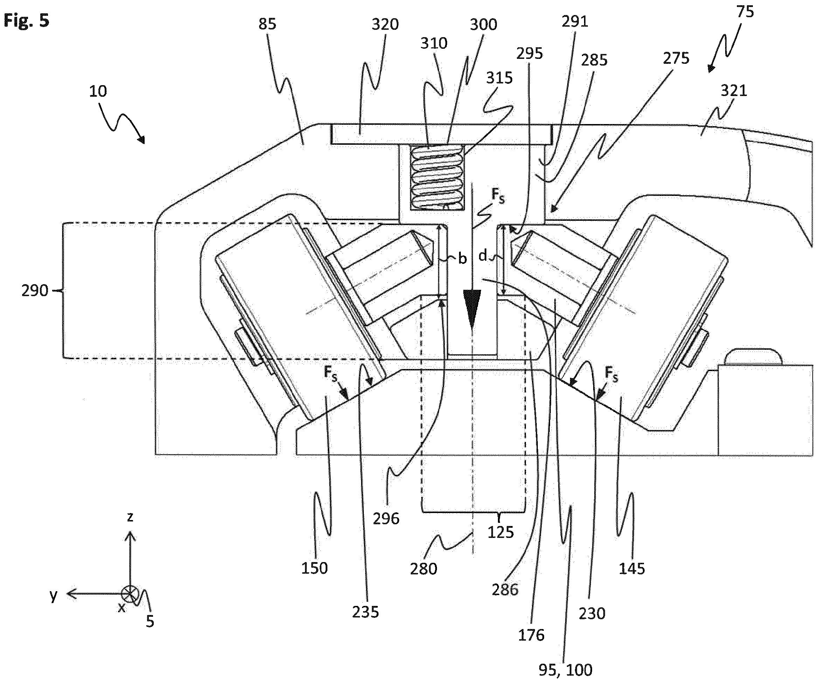

Figur 5 zeigt einen vergrößerten Ausschnitt B der in Figur 3 gezeigten Schnittansicht, wobei zur besseren Übersicht auf eine Schraffur der Schnittflächen verzichtet wurde.

Die erste Führungseinheit 75 weist eine erste Lagereinrichtung 275 auf. Die erste Lagereinrichtung 275 lagert den ersten Drehschemel 95 um die erste Drehschemelachse 280, die vorzugsweise parallel zur z-Achse ausgerichtet ist.

Die erste Lagereinrichtung 275 weist neben einer im dritten Drehschemelabschnitt 125 des ersten Drehschemels 95 angeordneten Aufnahme 176 ein Lagerelement 285 und ein Begrenzungselement 286 auf. Die Aufnahme 176 erstreckt sich in z-Richtung und ist vorzugsweise mittig des dritten Drehschemelabschnitts 125 angeordnet.

Das Lagerelement 285 weist einen Bolzenabschnitt 290 und einen Absatz 291 auf. Der Absatz 291 ist mit dem Bolzenabschnitt 290 verbunden. Der Bolzenabschnitt 290 durchgreift die Aufnahme 176 und ist korrespondierend zur Aufnahme 176 ausgebildet.

Auf einer dem Bolzenabschnitt 290 zugewandten Seite weist der Absatz 291 eine Anschlagsfläche 295 auf. Die Anschlagsfläche 295 ist parallel zum dritten Drehschemelabschnitt 125 ausgerichtet.

Der Bolzenabschnitt 290 durchgreift ferner das das Begrenzungselement 286. Das Begrenzungselement 286 ist zwischen dem dritten Drehschemelabschnitt 125 und der Laufschiene 20 angeordnet und ist fest mit dem Bolzenabschnitt 290 beispielsweise mittels einer Pressverbindung verbunden. Ferner ist der Absatz 291 drehfest mit dem Träger 321 verbunden.

Auf einer dem Bolzenabschnitt 290 zugewandten Seite weist das Begrenzungselement 286 eine weitere Anschlagsfläche 296 auf. Die weitere Anschlagsfläche 296 ist parallel zum dritten Drehschemelabschnitt 125 ausgerichtet. Von besonderem Vorteil ist beispielsweise, wenn ein Abstand b zwischen der Anschlagsfläche 295 und der weiteren Anschlagsfläche 296 größer ist als eine Höhe d des dritten Drehschemelabschnitts 125.

An der Anschlagsfläche 295 liegt der dritte Drehschemelabschnitt 125 oberseitig an, sodass eine Position des Drehschemels 95, 100 in Höhenrichtung in eine erste Richtung festgelegt ist. Unterseitig wird die Position des ersten Drehschemels 95 relativ zur Koppeleinheit 85 zum einen durch das Aufliegen der ersten und zweiten Laufrollen 145, 150 und zum anderen durch ein Anschlagen des dritten Drehschemelabschnitts 125 an der weiteren Anschlagsfläche begrenzt.

In der Ausführungsform weist die erste Führungseinheit 75 neben der ersten Lagereinrichtung 275 eine identisch zur ersten Lagereinrichtung 275 ausgebildete zweite Lagereinrichtung 276 auf, die den zweiten Drehschemel 100 drehbar um die zweite Drehschemelachse 281 lagert (vgl. Figuren 2 und 3).

Durch die Verschwenkbarkeit des Drehschemels 95, 100 um die Drehschemelachse 280, 281 wird sichergestellt, dass insbesondere im Bogenabschnitt 35, 40 der Drehschemel 95, 100 um die Drehschemelachse 280, 281 gedreht wird und ein Verkanten der Führungseinheit 75, 80 an der Laufschiene 20 verhindert wird. Ferner wird ein zuverlässiger Kontakt aller Laufrollen 145, 150, 180, 185 auch bei engen Kurvenradien im Bogenabschnitt 35, 40 sichergestellt.

Die erste Führungseinheit 75 weist ein Spannmittel 300 auf. Das Spannmittel 300 ist zwischen der Koppeleinheit 85 und den Drehschemeln 95, 100 angeordnet. Beispielhaft weist das Spannmittel 300 ein Spannelement 310, das in der Ausführungsform als Druckfeder ausgebildet ist, und eine Spannaufnahme 315 auf. Die Spannaufnahme 315 ist korrespondierend zum Spannelement 310 ausgebildet und in der Ausführungsform im Absatz 291 angeordnet. Die Spannaufnahme 315 ist als Sackloch ausgebildet und wird oberseitig durch einen Deckel 320 der Koppeleinheit 85 verschlossen. Der Deckel 320 ist mit einem Träger 321 der Koppeleinheit 85 verbunden, beispielsweise verschraubt. Vorzugsweise ist das Spannelement 310 in der Spannaufnahme 315 vorgespannt angeordnet und stellt eine Spannkraft F_{S} bereit. Die Spannkraft F_{S} wird über den Grund der Spannaufnahme 315 in das Lagerelement 285 eingeleitet. Das Lagerelement 285 überträgt die Spannkraft F_{S} über einen Berührkontakt der Anschlagsfläche 295 mit dem dritten Drehschemelabschnitt 125 in den Drehschemel 95, 100, der die Spannkraft F_{S} an die ersten und zweiten Laufrollen 145, 150 überträgt. Dadurch werden die ersten und zweiten Laufrollen 145, 150 besonders gut an die ersten und zweiten Schienenlaufflächen 230, 235 angepresst.

Rückseitig stützt sich das Spannelement 310 am Deckel 320 ab. Durch die Verbindung des Deckels 320 mit dem Träger 321 wird der Kraftschluss zu der ersten und zweiten Laufrolle 145, 150 dadurch geschlossen, dass sich der Träger 321 über dem zweiten Drehschemel 100 und den dritten und vierten Laufrollen 180, 185 auf der gegenüberliegenden Seite der Laufschiene 20 abstützt und dadurch auch die dritte und vierte Laufrolle 180, 185 zuverlässig an die dritte und vierte Schienenlauffläche 240, 245 angepresst werden. Dadurch können zum einen Unebenheiten auf der Lauffläche 160, 165, 186, 187 und der Schienenlauffläche 230, 235, 240, 235 abgefedert werden, zum anderen aber auch im Bogenabschnitt 35, 40 ein gleichzeitiger Rollkontakt aller Laufrollen 145, 150, 180, 185 an der Laufschiene 20 sichergestellt werden.

Ferner kann dadurch ein Verschleißausgleich der Laufrollen 145, 150, 180, 185 erzielt werden und gleichzeitig auch mit zunehmendem Verschleiß der Laufrollen 145, 150, 180, 185 die Spielfreiheit beim Abrollen der Laufrollen 145, 150, 180, 185 auf der Laufschiene 20 auch im Bogenabschnitt 35, 40 sichergestellt werden.

Durch die oben beschriebene Ausgestaltung des Lineartransportsystems 10 kann insbesondere der Bogenabschnitt 35, 40 einen besonders engen Kurvenradius aufweisen.

Auch wird durch die oben beschriebene Ausgestaltung sichergestellt, dass die erste Führungseinheit 75 ausschließlich vier Laufrollen 145, 150, 180, 185 aufweist und dadurch besonders kostengünstig herstellbar ist.

In der Ausführungsform sind die Drehschemel 95, 100 jeweils identisch ausgebildet und jeweils über das Spannmittel 300 vorgespannt. Selbstverständlich ist auch denkbar, dass nur das Spannmittel 300 zwischen dem ersten Drehschemel 95 und der Koppeleinheit 85 vorgesehen ist. Auch kann auf das Spannmittel 300 verzichtet werden.

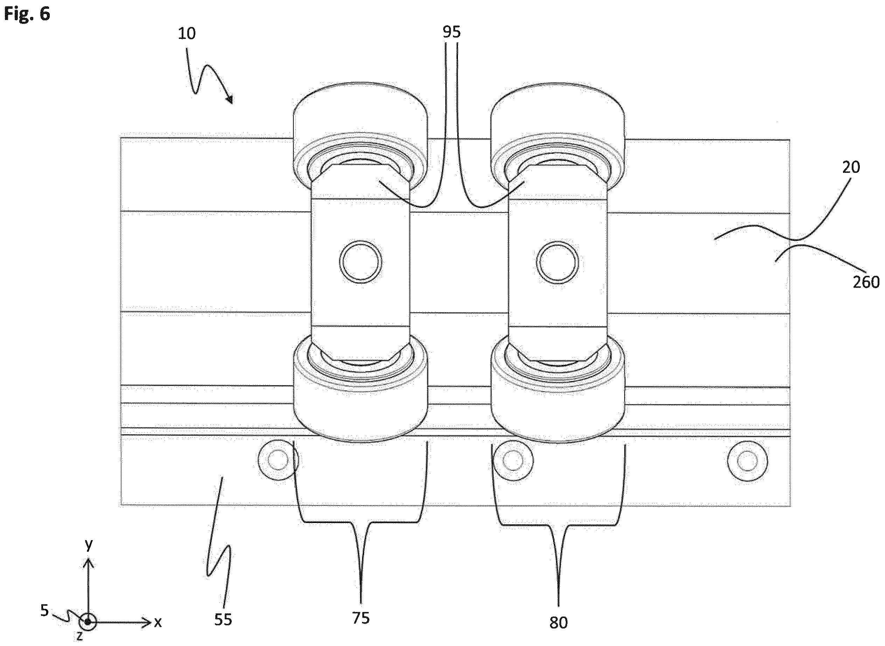

Figur 6 zeigt eine Schnittansicht entlang einer in Figur 2 gezeigten Schnittebene B-B durch das in Figur 2 gezeigte Lineartransportsystem 10, wobei zur besseren Übersicht auf eine Schraffur der Schnittflächen verzichtet wurde.

In Längsrichtung ist versetzt zu der ersten Führungseinheit 75 die zweite Führungseinheit 80 angeordnet. Die zweite Führungseinheit 80 ist identisch zu der ersten Führungseinheit 75 ausgebildet. Die zweite Führungseinheit 80 ist mittels der hier nicht dargestellten Koppeleinheit 85 mit der ersten Führungseinheit 75 verbunden. Die zweite Führungseinheit 80 sichert in Verbindung mit der ersten Führungseinheit 75 eine präzise Bewegung der Fördereinrichtung 25 entlang der Laufschiene 20 und verhindert ein Verkippen der Fördereinrichtung 25 um die z-Achse.

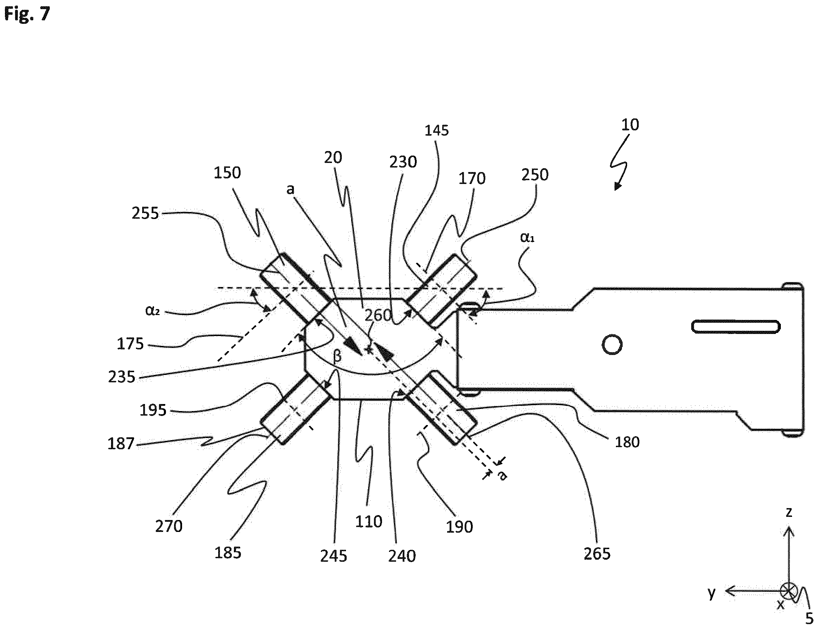

Figur 7 zeigt eine Schnittansicht entlang der in Figur 2 gezeigten Schnittebene A-A durch ein Lineartransportsystem 10 gemäß einer zweiten Ausführungsform, wobei zur besseren Übersicht auf eine Schraffur der Schnittflächen verzichtet wurde. Zur vereinfachten Darstellung sind von der Fördereinrichtung 25 ausschließlich die Laufrollen 145, 150, 180, 185 dargestellt.

Das Lineartransportsystem 10 ist im Wesentlichen identisch zu den in den Figuren 1 bis 6 erläuterten Ausführungsformen des Lineartransportsystems 10 ausgebildet. Abweichend dazu ist gegenüber der in Figur 4 erläuterten Ausgestaltung die Schienenlauffläche 230, 235, 240, 245 steiler geneigt zueinander angeordnet.

Durch die steilere Ausgestaltung ist der dritte Winkel β zwischen der ersten Schienenlauffläche 230 und der zweiten Schienenlauffläche 235 gegenüber der in Figur 4 gezeigten Ausgestaltung der Laufschiene 20 geringer als in Figur 4 gezeigt. Ferner sind in Figur 7 der erste und zweite Winkel α₁, α₂ für die Neigung der Drehachsen 170, 175, 190, 195 aus der Horizontalen (xy-Ebene) heraus größer als in Figur 4.

Dies bewirkt, dass die Berührlinie 250, 255, 265, 270 einen geringeren minimalen Abstand a zu der Schienenlängsachse 260 aufweist als in Figur 4. Dadurch kann gegenüber Figur 4 nur ein geringeres Drehmoment aus der Fördereinrichtung an der Laufschiene 20 abgestützt werden, jedoch wird eine besonders kompakte Ausgestaltung der Laufschiene 20 in Querrichtung bereitgestellt. Resultierend kann dadurch das Lineartransportsystem 10 besonders kompakt ausgebildet sein.

Ferner ist eine Torsionssteifigkeit der Laufschiene 20 um die Schienenlängsachse 260 durch die steilere Anordnung der Schienenlaufflächen 230, 235, 240, 245 gegenüber der in Figur 4 gezeigten Ausgestaltung verringert. Vorteilhaft ist jedoch dass die Laufschiene 20 in y-Richtung kompakter ausgebildet ist. Dadurch kann die Fördereinrichtung ebenso kompakter ausgebildet werden.

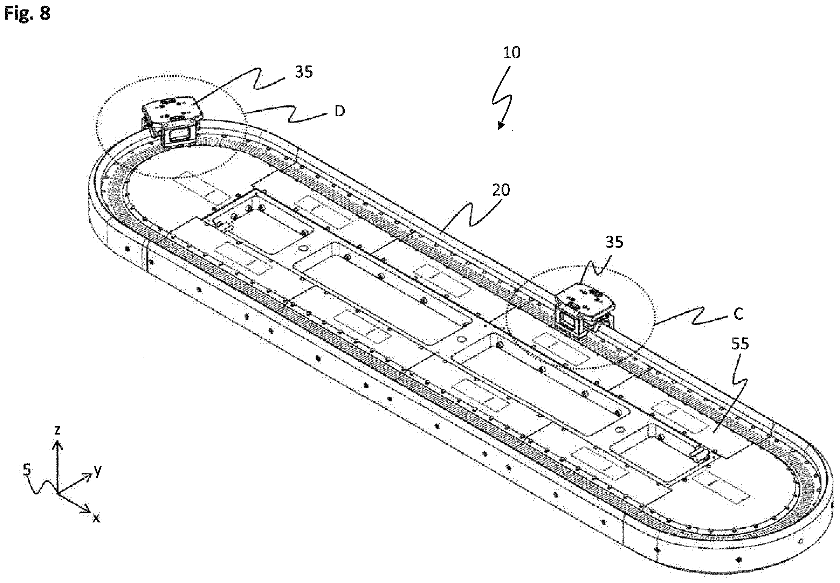

Figur 8 zeigt eine perspektivische Darstellung eines Lineartransportsystems 10 gemäß einer dritten Ausführungsform.

Das Lineartransportsystem 10 ist im Wesentlichen identisch zu den in den Figuren 1 bis 7 erläuterten Lineartransportsystemen 10 ausgebildet. Das in Figur 8 gezeigte Lineartransportsystem 10 ist sowohl durch die gegenüber der in den Figuren 1 bis 7 geänderte Ausrichtung der Laufschiene 20 als auch durch die geänderte konstruktive Ausgestaltung der Fördereinrichtung 25 besonders für hohe Lasten, insbesondere schwere Objekte, die gegebenenfalls seitlich an der Fördereinrichtung 25 angeordnet sind, geeignet.

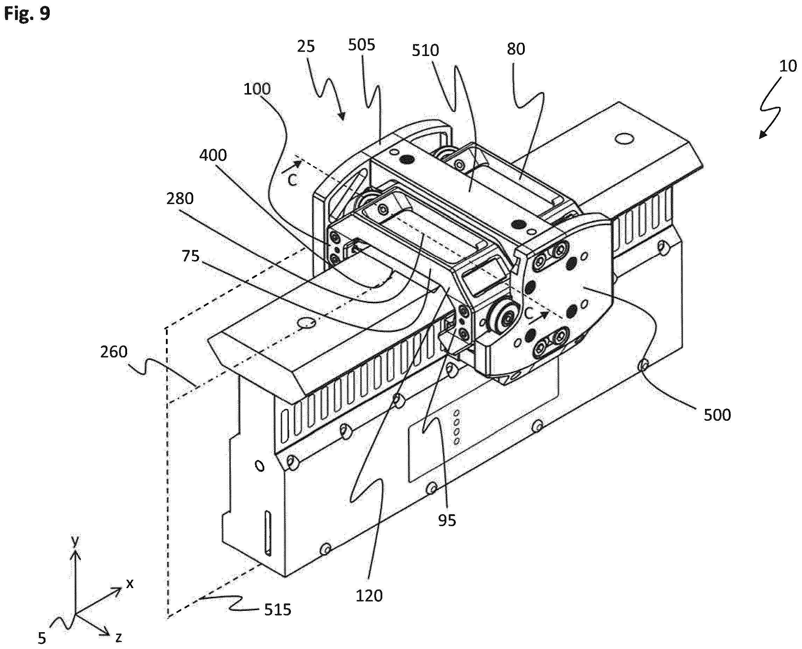

Figur 9 zeigt einen vergrößerten Ausschnitt C des in Figur 8 gezeigten Lineartransportsystems 10 in einer zum Betrachter hin gekippten Lage.

Die erste Führungseinheit 75 weist zusätzlich zum ersten und zweiten Drehschemel 95, 100 einen Drehschemelverbindungsabschnitt 400 auf, der den ersten Drehschemel 95 mit dem zweiten Drehschemel 100 verbindet. Der Drehschemelverbindungsabschnitt 400 erstreckt sich in Querrichtung und verbindet den ersten Drehschemel 95 mit dem zweiten Drehschemel 100. Der Drehschemelverbindungsabschnitt 400 ist oberseitig der Laufschiene 20 angeordnet.

In der Ausführungsform sind in Längsrichtung jeweils zwei Führungseinheiten 75, 80 für die Fördereinrichtung 25 vorgesehen. In der Ausführungsform ist die zweite Führungseinheit 80 identisch zur ersten Führungseinheit 75 ausgebildet. Die zweite Führungseinheit 80 ist in Längsrichtung, also der x-Richtung, versetzt zu der ersten Führungseinheit 75 beabstandet angeordnet.

Die Koppeleinheit 85 ist im Wesentlichen identisch zu der in den vorhergehenden Figuren gezeigten Koppeleinheit ausgebildet. Abweichend dazu ist die Koppeleinheit 85 mehrteilig ausgebildet und umfasst einen ersten Träger 500, einen zweiten Träger 505 und einen Verbinder 510.

Der erste Träger 500 und der zweite Träger 505 sind spiegelsymmetrisch zu einer Symmetrieebene 515 angeordnet.

Die Symmetrieebene 515 ist als xy-Ebene ausgebildet und die Schienenlängsachse 260 verläuft in der Symmetrieebene 515. Die Träger 500, 505 sind plattenartig ausgebildet und im Wesentlichen parallel zur Schienenlängsachse 260 ausgerichtet. Zwischen dem ersten Träger 500 und dem zweiten Träger 505 sind die Führungseinheiten 75, 80, der Stator 55 und die Laufschiene 20 angeordnet.

Auf einer zur Laufschiene 20 abgewandten Seite verbindet der Verbinder 510 den ersten Träger 500 mit dem zweiten Träger 505. In Längsrichtung ist der Verbinder 510 zwischen der ersten Führungseinheit 75 und der zweiten Führungseinheit 80 angeordnet. Der Verbinder 510 ist deutlich schmaler in Längsrichtung ausgebildet als der Träger 500, 505, so dass die Führungseinheit 75, 80 oberseitig offen ist. Der Verbinder 510 ist senkrecht zur Laufschiene 20 ausgerichtet und jeweils an seinen Enden mit dem Träger 500, 505 verschraubt.

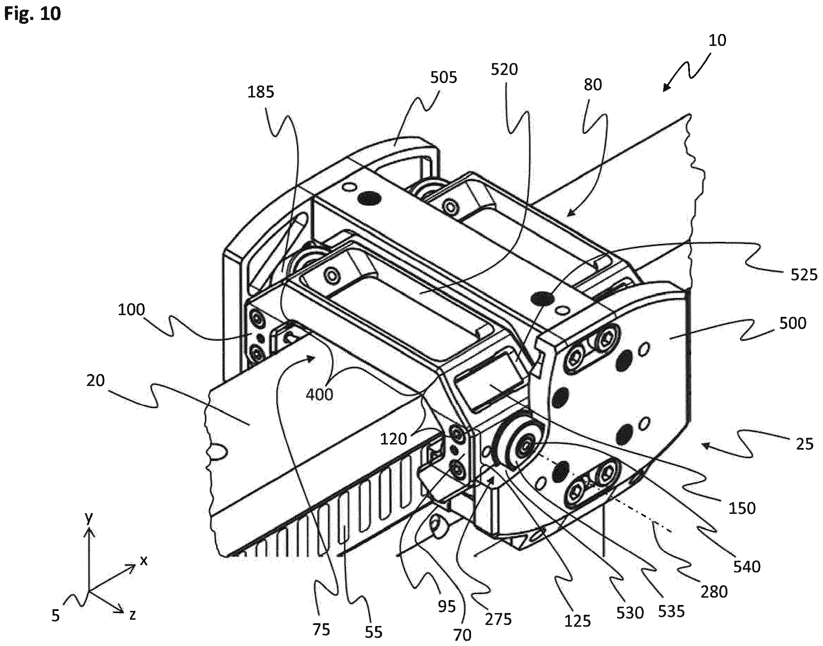

Figur 10 zeigt einen nochmals vergrößerten Ausschnitt C des in Figur 8 gezeigten Lineartransportsystems 10.

In dem Drehschemelverbindungsabschnitt 400 ist eine erste Aussparung 520 angeordnet. Die erste Aussparung 520 ist als Durchgangsöffnung ausbildet und verjüngt sich von außen nach innen zur Führungsschiene 20. Die erste Aussparung 520 ist in Längsrichtung geschlossen ausgebildet. Dadurch kann ein Gewicht der Fördereinrichtung 25 gering gehalten werden. Ferner wird eine Zugänglichkeit an eine Befestigung der zweiten und vierten Laufrolle 150, 185 gewährleistet.

Im zweiten Drehschemelabschnitt 120 des ersten Drehschemels 95 ist eine zweite Aussparung 525 vorgesehen. Die zweite Aussparung ist als Durchgangsöffnung ausgebildet. In Längsrichtung ist die zweite Aussparung 525 geschlossen. In der zweiten Aussparung 525 ist die zweite Laufrolle 150 angeordnet. Ebenso kann für jede der anderen Laufrollen jeweils die zweite Aussparung 525 zur Aufnahme der Laufrolle im Drehschemel 95, 100 vorgesehen sein, um eine besonders kompakte Ausgestaltung der Führungseinheit 75, 80 sicherzustellen.

Ferner ist die Lagereinrichtung 275 andersartig als in Figur 5 gezeigt ausgebildet. Für jede Lagereinrichtung 275 ist im Träger 500, 505 jeweils eine Lageraufnahme 530 vorgesehen. Die Lageraufnahme 530 ist auf einer dem Drehschemel 95, 100 zugewandten Seite des Trägers 500, 505 offen ausgebildet.

Die Lagereinrichtung 275 umfasst eine Lagerbuchse 535 und einen Lagerbolzen 540, wobei die Lagerbuchse 535 in der Lageraufnahme 530 angeordnet und drehfest mit dem Träger 500, 505 verbunden ist. Der Lagerbolzen 540 greift sowohl in die Lagerbuchse 530 als in den dritten Drehschemelabschnitt 125 ein. Der Lagerbolzen 540 ist mit dem Drehschemel 95, 100 drehfest verbunden und lagert drehbar die erste Führungseinheit 75 um die Drehschemelachse 280 in der Lagerbuchse 540.

Unterseitig ist auf einer dem Stator 55 zugewandten Seite des Trägers 500, 505 die Magnetanordnung 70 am Träger 500, 505 befestigt.

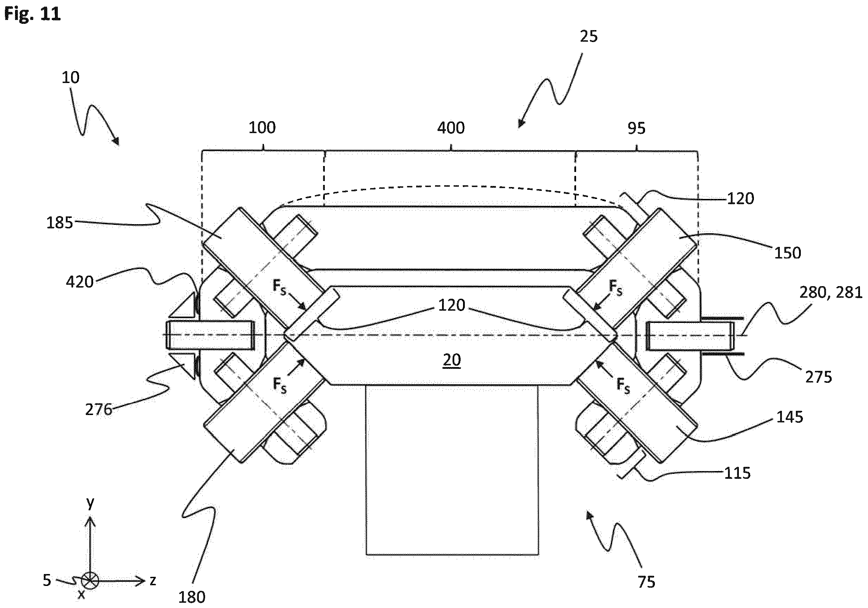

Figur 11 zeigt eine Schnittansicht entlang der in Figur 9 gezeigten Schnittebene C-C durch das in Figur 9 gezeigte Lineartransportsystem 10, wobei zur besseren Übersicht auf eine Schraffur der Schnittflächen verzichtet wurde.

Durch die Kopplung des ersten Drehschemels 95 mit dem zweiten Drehschemel 100 durch den Drehschemelverbindungsabschnitt 400 und die einstückige und materialeinheitliche Ausgestaltung des Drehschemels 95, 100 mit dem Drehschemelverbindungsabschnitt 400 weist die erste Führungseinheit 75 eine im Wesentlichen C-förmige Ausgestaltung auf. Durch Koppelung der beiden Drehschemel 95, 100 mittels des Drehschemelverbindungsabschnitts 400 überlagern sich die Drehschemelachsen 280, 281, sodass die erste und dritte Laufrolle 145, 180 sowie die zweite und vierte Laufrolle 150, 185 parallel geführt sind.

Von besonderem Vorteil ist hierbei, wenn der Drehschemelverbindungsabschnitt 400 die Funktion des Spannmittels dadurch übernimmt, dass im montierten Zustand der Drehschemelverbindungsabschnitt 400 gegenüber seiner ursprünglichen Ausrichtung um die y-Achse aufgebogen ist (in Figur 11 übertrieben mittels strichlierter Linien dargestellt). Dadurch presst der Drehschemelverbindungsabschnitt 400 die Laufrollen 145, 150, 180, 185 mittels der Spannkraft F_{S} an die Laufschiene 20 an. Durch die Vorspannung des Drehschemelverbindungsabschnitts 400 wird ferner eine spielfreie Lagerung der Fördereinrichtung 25 an der Laufschiene 20 sichergestellt, bei der gleichzeitig auch ein Verschleiß der Laufrollen 145, 150, 180, 185 und/oder Toleranzen innerhalb der Fördereinrichtung 25 ausgeglichen werden können. Dadurch kann die Führungseinheit 75 mit einer besonders geringen Bauteilanzahl bereitgestellt werden.

In der Ausführungsform verbindet der Drehschemelverbindungsabschnitt 400 jeweils die zweiten Drehschemelabschnitte 120 der Drehschemel 95, 100 miteinander. Besonders von Vorteil ist, wenn die erste Lagereinrichtung 275 als Festlager in z-Richtung und die zweite Lagereinrichtung 276 als Loslager in z-Richtung ausgebildet ist. Dadurch können Toleranzen zwischen der ersten Führungseinheit 75 und der hier nicht dargestellten Koppeleinheit 85 ausgeglichen werden.

Zusätzlich kann zu der ersten und/oder zweiten Lagereinrichtung 275, 276 auch ein Vorspannelement 420 vorgesehen sein, wobei das Vorspannelement 420 beispielsweise eine Tellerfeder oder ein Elastomer, vorzugsweise eine Gummischeibe, umfasst. Das Vorspannelement 420 ist beispielsweise zwischen der Koppeleinheit 85 und dem zweiten Drehschemel 100 angeordnet und verspannt die erste und zweite Lagereinrichtung 275, 276 gegenüber der Koppeleinheit 85. Durch das Vorspannelement 420 kann die Position in Querrichtung der Führungseinheit 75, 80 zuverlässig in der Koppeleinheit 85 festgelegt werden.

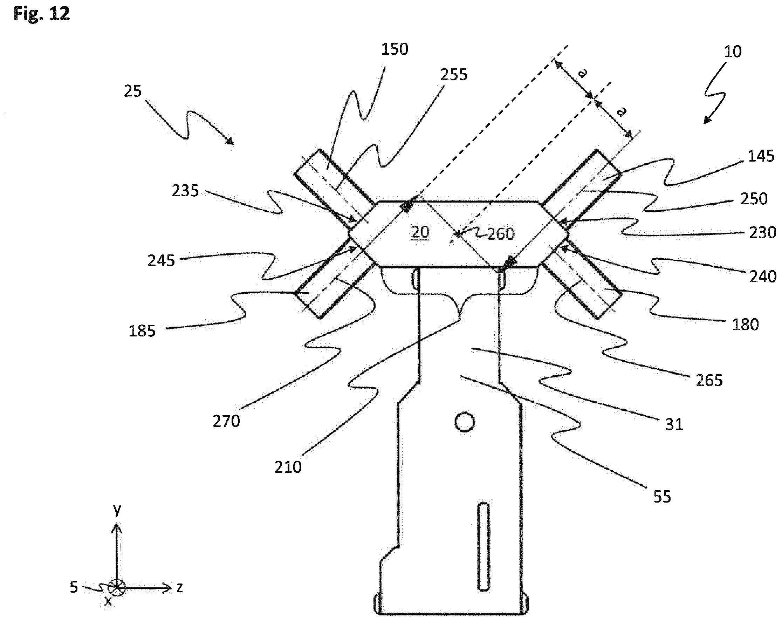

Figur 12 zeigt einen Querschnitt entlang einer in Figur 9 gezeigten Schnittebene C-C durch das in Figur 9 gezeigte Lineartransportsystem 10, wobei zur besseren Übersicht auf eine Schraffur der Schnittflächen verzichtet wurde. Zur vereinfachten Darstellung sind von der Fördereinrichtung 25 ausschließlich die Laufrollen 145, 150, 180, 185 dargestellt.

Die Laufschiene 20 ist im Wesentlichen identisch zu der in Figur 4 gezeigten Ausgestaltung ausgebildet. Abweichend dazu wird auf den Befestigungsabschnitt (und dem weiteren Verbindungsabschnitt) der in Figur 4 gezeigten Laufschiene 20 verzichtet.

Die Laufschiene 20 ist in der Ausführungsform gegenüber der in Figur 4 gezeigten Ausgestaltung um 90° gedreht angeordnet, sodass der Verbindungsabschnitt 210 senkrecht zu dem Stator 55 ausgerichtet ist. Die Laufschiene 20 ist am Verbindungsabschnitt 210 mit dem Antriebsmodul 31 verbunden. Dadurch kann ein Biegemoment innerhalb der Laufschiene 20 besonders niedrig gehalten werden, sodass besonders schwere Lasten aus der Fördereinrichtung 25 an der Laufschiene 20 abgestützt werden können. Von besonderem Vorteil ist, wenn der Verbindungsabschnitt 210 mittig auf dem Stator 55 befestigt ist.

Der Verbindungsabschnitt 210 ist breiter als in Figur 4 gezeigt ausgebildet. Ferner sind die Schienenlaufflächen 230, 235, 240, 245 gegenüber der Horizontalen bzw. dem Verbindungsabschnitt 210 besonders steil angeordnet. Dadurch weisen die Berührlinien 250, 255, 265, 270 einen besonders großen minimalen Abstand a zu der Schienenlängsachse 260 auf. Dadurch kann ein besonders hohes Drehmoment aus der Fördereinrichtung 25 an der Laufschiene 20 abgestützt werden.

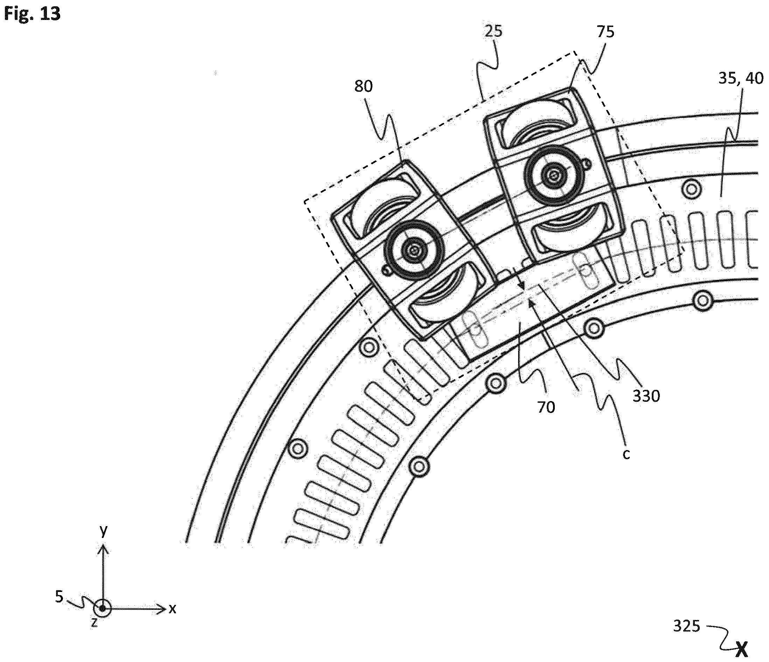

Figur 13 zeigt einen vergrößerten Ausschnitt D des in Figur 8 gezeigten Lineartransportsystems 10. Im Bogenabschnitt 35, 40 ist die Magnetanordnung 70 bezogen auf eine Idealposition der Magnetanordnung 70, in der eine maximale magnetische Kopplung zwischen Magnetanordnung 70 und Wanderfeld eintritt, radial bezogen auf einen Bogenmittelpunkt 325 des Bogenabschnitts 35, 40 nach innen versetzt positioniert. Mit zunehmender Abweichung c zwischen der Position der Magnetanordnung 70 und der Idealposition 330 ist eine Kopplung des Wanderfelds mit der Magnetanordnung 70 reduziert. Insbesondere nimmt die Abweichung c mit geringerem Kurvenradius des Bogenabschnitts 35, 40 zu. In einer Weiterbildung kann zusätzlich eine Ausgleichseinrichtung vorgesehen sein, die die Magnetanordnung 70 im Bogenabschnitt 35, 40 in Richtung der Idealposition 330 bewegt. Dadurch wird auch im Bogenabschnitt 35, 40 sichergestellt, dass die auf die Fördereinrichtung 25 wirkende Kraft aus dem Wanderfeld des Stators 55 im Wesentlichen konstant ist.
Die Ausgleichseinrichtung kann ebenfalls bei einem Lineartransportsystem 10 gemäß einer der Figuren 1 bis 8 vorgesehen werden.

Die in den Figuren 8 bis 13 beschriebene Ausgestaltung des Lineartransportsystems 10 hat den Vorteil, dass eine hohe Stützbreite zwischen den Laufrollen 145, 150, 180, 185 bereitgestellt werden kann und durch die Verbindung der beiden Drehschemel 95, 100 jeder Führungseinheit 75, 80 durch den Drehschemelverbindungsabschnitt 400 eine besonders günstige Lagerung und Abstützung von Kräften aus der Fördereinrichtung 25 in die Laufschiene 20 bereitgestellt werden kann.

### Bezugszeichenliste

- 5: Koordinatensystem
- 10: Transportsystem
- 15: Objekt
- 20: Laufschiene
- 25: Fördereinrichtung
- 30: Antriebseinrichtung
- 31: Antriebsmodul
- 35: erster Bogenabschnitt
- 40: zweiter Bogenabschnitt
- 45: erster Geradabschnitt
- 50: zweiter Geradabschnitt
- 51: Linearmotor
- 55: Stator
- 60: Steuergerät
- 65: Spule
- 70: Magnetanordnung
- 75: erste Führungseinheit
- 80: zweite Führungseinheit
- 85: Koppeleinheit
- 90: Statorseitenfläche
- 95: erster Drehschemel
- 100: zweiter Drehschemel
- 105: Oberseite der Laufschiene
- 110: Unterseite der Laufschiene
- 115: erster Drehschemelabschnitt
- 120: zweiter Drehschemelabschnitt
- 125: dritter Drehschemelabschnitt
- 145: erste Laufrolle
- 150: zweite Laufrolle
- 160: erste Lauffläche
- 165: zweite Lauffläche
- 170: erste Drehachse
- 175: zweite Drehachse
- 176: Aufnahme
- 180: dritte Laufrolle
- 185: vierte Laufrolle
- 186: dritte Lauffläche
- 187: vierte Lauffläche
- 190: dritte Drehachse
- 195: vierte Drehachse
- 200: Befestigungsabschnitt
- 205: erster Führungsabschnitt
- 210: Verbindungsabschnitt
- 215: zweiter Führungsabschnitt
- 220: freies Ende der Laufschiene
- 225: festes Ende
- 226: weiterer Verbindungsabschnitt
- 230: erste Schienenlauffläche
- 235: zweite Schienenlauffläche
- 240: dritte Schienenlauffläche
- 245: vierte Schienenlauffläche
- 250: erste Berührlinie
- 255: zweite Berührlinie
- 260: Schienenmittelachse
- 265: dritte Berührlinie
- 270: vierte Berührlinie
- 275: erste Lagereinrichtung
- 276: zweite Lagereinrichtung
- 280: erste Drehschemelachse
- 281: zweite Drehschemelachse
- 285: Lagerelement
- 286: Begrenzungselement
- 290: Bolzenabschnitt
- 291: Absatz
- 295: Anschlagsfläche
- 296: weitere Anschlagsfläche
- 300: Spannmittel
- 310: Spannelement
- 315: Spannaufnahme
- 320: Deckel
- 321: Träger
- 325: Bogenmittelpunkt
- 330: Idealposition
- 400: Drehschemelverbindungsabschnitt
- 420: Vorspannelement
- 500: erster Träger
- 505: zweiter Träger
- 510: Verbinder
- 515: Symmetrieebene
- 520: erste Aussparung
- 525: zweite Aussparung
- 530: Lageraufnahme
- 535: Lagerbuche

## Patentansprüche

1. Lineartransportsystem (10) zur Förderung eines Objekts (15),
- wobei das Lineartransportsystem (10) wenigstens eine ortsfeste Laufschiene (20) und wenigstens eine bewegbare Fördereinrichtung (25) umfasst,
- wobei die Fördereinrichtung (25) eine erste Führungseinheit (75) mit einer ersten Laufrolle (145), einer zweiten Laufrolle (150) und einem ersten Drehschemel (95) umfasst,
- wobei an dem ersten Drehschemel (95) die erste Laufrolle (145) und die zweite Laufrolle (150) drehbar gelagert sind und an der Laufschiene (20) anliegen,
- wobei die Laufschiene (20) eine in Längsrichtung verlaufende Schienenlängsachse (260) aufweist,
- wobei der erste Drehschemel (95) drehbar um eine Drehschemelachse (280) gelagert ist,
- wobei die Drehschemelachse (280) geneigt, zu der Schienenlängsachse (260) angeordnet ist,
- wobei die erste Führungseinheit (75) eine dritte Laufrolle (180) und eine vierte Laufrolle (185) umfasst,
- wobei sich die Laufrollen (145, 150, 180, 185) beidseitig der Laufschiene (20) abstützen,
**dadurch gekennzeichnet, dass**
- die erste Führungseinheit (75) einen zweiten Drehschemel (100)umfasst,
- wobei an dem zweiten Drehschemel (100) die dritte Laufrolle (180) und die vierte Laufrolle (185) drehbar gelagert sind und an der Laufschiene (20) anliegen,
- wobei die Laufschiene (20) zwischen dem ersten Drehschemel (95) und dem zweiten Drehschemel (100) angeordnet ist,
- wobei der zweite Drehschemel (100) gegenüberliegend zu dem ersten Drehschemel (95) angeordnet ist und drehbar um eine weitere Drehschemelachse (281) gelagert ist,
- wobei die weitere Drehschemelachse (281) geneigt, zu der Schienenlängsachse (260) angeordnet ist.

2. Lineartransportsystem nach Anspruch 1,
- wobei die Drehschemelachse (280) und die weitere Drehschemelachse (281) parallel zueinander ausgerichtet sind.

3. Lineartransportsystem (10) nach Anspruch 1 oder 2,
- wobei die erste bis vierte Laufrolle (145, 150, 180, 185) gemeinsam in einer X-Anordnung an der Laufschiene (20) angeordnet sind.

4. Lineartransportsystem (10) nach einem der vorhergehenden Ansprüche,
- wobei an dem ersten Drehschemel (95) die erste Laufrolle (145) drehbar um eine erste Drehachse (170) und die zweite Laufrolle (150) drehbar um eine zweite Drehachse (175) gelagert sind,
- wobei die Drehschemelachse (280) geneigt zu der ersten Drehachse (170) und/oder zweiten Drehachse (175) angeordnet ist,
- wobei die Drehschemelachse (280) und die erste Drehachse (170) und/oder die zweite Drehachse (175) in einer gemeinsamen Ebene angeordnet sind.

5. Lineartransportsystem (10) nach einem der Ansprüche 1 bis 4,
- wobei die erste Führungseinheit (75) einen Drehschemelverbindungsabschnitt (400) umfasst,
- wobei der Drehschemelverbindungsabschnitt (400) an der Laufschiene (20) vorbeigeführt ist und den ersten Drehschemel (95) mit dem zweiten Drehschemel (100) derart koppelt, dass die Drehschemelachse (280) und die weitere Drehschemelachse (281) überlappen.

6. Lineartransportsystem (10) nach Anspruch 5, wobei der Drehschemelverbindungsabschnitt (400), der erste Drehschemel (95) und der zweite Drehschemel (100) einstückig und materialeinheitlich ausgebildet sind.

7. Lineartransportsystem (10) nach einem der vorhergehenden Ansprüche,
- wobei die Laufschiene (20) eine erste Schienenlauffläche (230), eine zweite Schienenlauffläche (235), eine dritte Schienenlauffläche (240) und eine vierte Schienenlauffläche (245) aufweist,
- wobei die erste Schienenlauffläche (230) schräg geneigt zu der zweiten Schienenlauffläche (235) angeordnet ist,
- wobei die erste Schienenlauffläche (230) und die zweite Schienenlauffläche (235) voneinander abgewandt sind,
- wobei die erste Laufrolle (145) auf der ersten Schienenlauffläche (230) und die zweite Laufrolle (150) auf der zweiten Schienenlauffläche (235) abrollen,
- wobei auf der dritten Schienenlauffläche (240) die dritte Laufrolle (180) und auf der vierten Schienenlauffläche (245) die vierte Laufrolle (185) abrollen,
- wobei die dritte Schienenlauffläche (240) schräg geneigt zu der vierten Schienenlauffläche (245) angeordnet ist,
- wobei die dritte Schienenlauffläche (240) und die vierte Schienenlauffläche (245) voneinander abgewandt sind,
- wobei die dritte Schienenlauffläche (240) auf einer zur ersten Schienenlauffläche (230) gegenüberliegenden Seite der Laufschiene (20) angeordnet ist,
- wobei die vierte Schienenlauffläche (245) auf einer zur zweiten Schienenlauffläche (235) gegenüberliegenden Seite angeordnet ist.

8. Lineartransportsystem (10) nach Anspruch 7,
- wobei die Laufrollen (145, 150, 155, 160) umfangsseitig jeweils eine Lauffläche (160, 165, 186, 187) aufweisen,
- wobei die Laufrollen (145, 150, 155, 160) jeweils eine Berührlinie (250, 255, 265, 270) mit der zugeordneten Schienenlauffläche (230, 235, 240, 245) aufweisen,
- wobei jeweils die Schienenlaufflächen (230, 235, 240, 245) derart an der Laufschiene (20) angeordnet sind, dass die Berührlinien (250, 255, 265, 270) jeweils seitlich beabstandet zu einer Schienenlängsachse (260) der Laufschiene (20) verlaufen,

9. Lineartransportsystem nach Anspruch 8,
- wobei die Berührlinien (250, 255, 265, 270) gemeinsam in einer Ebene angeordnet sind,
- wobei die Schienenlängsachse (260) senkrecht zu der Ebene angeordnet ist.

10. Lineartransportsystem (10) nach einem der Ansprüche 7 bis 9,
- wobei die erste Schienenlauffläche (230) und die zweite Schienenlauffläche (235) auf einer ersten Seite (105) der Laufschiene (20) und die dritte Schienenlauffläche (240) und die vierte Schienenlauffläche (245) auf einer zur ersten Seite (105) gegenüberliegenden zweiten Seite (110) der Laufschiene (20) angeordnet sind,
- wobei die erste Schienenlauffläche (230) und die vierte Schienenlauffläche (245) parallel zueinander ausgerichtet sind,
- und/oder
- wobei die zweite Schienenlauffläche (235) und die dritte Schienenlauffläche (240) parallel zueinander ausgerichtet sind.

11. Lineartransportsystem (10) nach einem der vorhergehenden Ansprüche,
- wobei die Fördereinrichtung (25) ein Spannmittel (300) umfasst,
- wobei das Spannmittel (300) ausgebildet ist, eine Spannkraft (F_{S}) bereitzustellen,
- wobei mittels der Spannkraft (F_{S}) die erste Laufrolle (145) und die zweite Laufrolle (150) an die Laufschiene (20) gedrückt werden.

12. Lineartransportsystem (10) nach einem der vorhergehenden Ansprüche,
- wobei der erste Drehschemel (95) einen ersten Drehschemelabschnitt (115), einen zweiten Drehschemelabschnitt (120) und einen dritten Drehschemelabschnitt (125) umfasst,
- wobei an dem ersten Drehschemelabschnitt (115) die erste Laufrolle (145) drehbar um eine erste Drehachse (170) und an dem zweiten Drehschemelabschnitt (120) die zweite Laufrolle (150) drehbar um eine zweite Drehachse (175) gelagert ist,
- wobei der dritte Drehschemelabschnitt (125) zwischen dem ersten Drehschemelabschnitt (115) und dem zweiten Drehschemelabschnitt (120) angeordnet ist und den ersten Drehschemelabschnitt (115) mit dem zweiten Drehschemelabschnitt (120) verbindet,
- wobei der erste Drehschemelabschnitt (115) und der zweite Drehschemelabschnitt (120) geneigt zueinander angeordnet sind und sich auf einer gemeinsamen Seite des dritten Drehschemelabschnitts (125) erstrecken.

13. Lineartransportsystem (10) nach einem der vorhergehenden Ansprüche,
- wobei die Fördereinrichtung (25) eine zweite Führungseinheit (80) und eine Koppeleinheit (85) umfasst,
- wobei die erste Führungseinheit (75) und die zweite Führungseinheit (80) identisch ausgebildet sind,
- wobei die Koppeleinheit (85) die erste Führungseinheit (75) mit der zweiten Führungseinheit (80) mechanisch koppelt.

14. Lineartransportsystem (10) nach einem der vorhergehenden Ansprüche,
- aufweisend eine Antriebseinrichtung (30),
- wobei die Antriebseinrichtung (30) einen Linearmotor (51) mit einem Stator (55), einer Magnetanordnung (70) und ein Steuergerät (60) umfasst,
- wobei die Magnetanordnung (70) mit der ersten Führungseinheit (75) gekoppelt ist,
- wobei der Stator (55) eine Vielzahl von getrennt bestrombaren Spulen (65) umfasst,
- wobei die Spulen (65) elektrisch mit dem Steuergerät (60) verbunden sind,
- wobei das Steuergerät (60) ausgebildet ist, eine definierte Anzahl der Spulen (65) derart zu steuern, dass die definierte Anzahl von Spulen (65) ein magnetisches Wanderfeld zur magnetischen Kopplung der Magnetanordnung (70) mit dem Stator (55) bereitstellen, um die Fördereinrichtung (25) zu bewegen,
- wobei die Spulen (65) versetzt zu der Laufschiene (20) und die Magnetanordnung (70) versetzt zu dem ersten Drehschemel (95) angeordnet sind und die Laufschiene (20) die Fördereinrichtung (25) in ihrer Bewegung führt.

## Claims

1. Linear transport system (10) for conveying an object (15),
- the linear transport system (10) comprising at least one stationary running rail (20) and at least one movable conveying device (25),
- the conveying device (25) comprising a first guide unit (75) with a first running roller (145), a second running roller (150) and a first rotary bogie (95),
- the first running roller (145) and the second running roller (150) being mounted rotatably on the first rotary bogie (95) and bearing against the running rail (20),
- the running rail (20) having a rail longitudinal axis (260) which runs in the longitudinal direction,
- the first rotary bogie (95) being mounted such that it can be rotated about a rotary bogie axis (280), the rotary bogie axis (280) being arranged in an inclined manner with respect to the rail longitudinal axis (260), the first guide unit (75) comprising a third running roller (180) and a fourth running roller (185), the running rollers (145, 150, 180, 185) being supported on both sides of the running rail (20),
**characterized in that**
- the first guide unit (75) comprises a second rotary bogie (100),
- the third running roller (180) and the fourth running roller (185) being mounted rotatably on the second rotary bogie (100) and bearing against the running rail (20),
- the running rail (20) being arranged between the first rotary bogie (95) and the second rotary bogie (100),
- the second rotary bogie (100) being arranged so as to lie opposite the first rotary bogie (95), and being mounted such that it can be rotated about a further rotary bogie axis (281),
- the further rotary bogie axis (281) being arranged in an inclined manner with respect to the rail longitudinal axis (260).

2. Linear transport system according to Claim 1,
- the rotary bogie axis (280) and the further rotary bogie axis (281) being oriented parallel to one another.

3. Linear transport system (10) according to Claim 1 or 2,
- the first to fourth running roller (145, 150, 180, 185) being arranged jointly in an X-arrangement on the running rail (20).

4. Linear transport system (10) according to one of the preceding claims,
- the first running roller (145) being mounted on the first rotary bogie (95) such that it can be rotated about a first rotational axis (170), and the second running roller (150) being mounted on the first rotary bogie (95) such that it can be rotated about a second rotational axis (175),
- the rotary bogie axis (280) being arranged such that it is inclined with respect to the first rotational axis (170) and/or second rotational axis (175),
- the rotary bogie axis (280) and the first rotational axis (170) and/or the second rotational axis (175) being arranged in a common plane.

5. Linear transport system (10) according to one of Claims 1 to 4,
- the first guide unit (75) comprising a rotary bogie connecting section (400),
- the rotary bogie connecting section (400) being guided past the running rail (20) and coupling the first rotary bogie (95) to the second rotary bogie (100) in such a way that the rotary bogie axis (280) and the further rotary bogie axis (281) overlap.

6. Linear transport system (10) according to Claim 5, the rotary bogie connecting section (400), the first rotary bogie (95) and the second rotary bogie (100) being configured in one piece and from the same material.

7. Linear transport system (10) according to one of the preceding claims,
- the running rail (20) having a first rail running face (230), a second rail running face (235), a third rail running face (240) and a fourth rail running face (245),
- the first rail running face (230) being arranged in an obliquely inclined manner with respect to the second rail running face (235),
- the first rail running face (230) and the second rail running face (235) facing away from one another,
- the first running roller (145) rolling on the first rail running face (230), and the second running roller (150) rolling on the second rail running face (235),
- the third running roller (180) rolling on the third rail running face (240), and the fourth running roller (185) rolling on the fourth rail running face (245),
- the third rail running face (240) being arranged in an obliquely inclined manner with respect to the fourth rail running face (245),
- the third rail running face (240) and the fourth rail running face (245) facing away from one another,
- the third rail running face (240) being arranged on a side of the running rail (20), which side lies opposite the first rail running face (230),
- the fourth rail running face (245) being arranged on a side which lies opposite the second rail running face (235).

8. Linear transport system (10) according to Claim 7,
- the running rollers (145, 150, 155, 160) in each case having a running face (160, 165, 186, 187) on the circumferential side,
- the running rollers (145, 150, 155, 160) in each case having a contact line (250, 255, 265, 270) with the associated rail running face (230, 235, 240, 245),
- the rail running faces (230, 235, 240, 245) being arranged in each case on the running rail (20) in such a way that the contact lines (250, 255, 265, 270) run in each case spaced apart laterally from a rail longitudinal axis (260) of the running rail (20).

9. Linear transport system according to Claim 8,
- the contact lines (250, 255, 265, 270) being arranged jointly in one plane,
- the rail longitudinal axis (260) being arranged perpendicularly with respect to the plane.

10. Linear transport system (10) according to one of Claims 7 to 9,
- the first rail running face (230) and the second rail running face (235) being arranged on a first side (105) of the running rail (20), and the third rail running face (240) and the fourth rail running face (245) being arranged on a second side (110) of the running rail (20), which second side (110) lies opposite the first side (105),
- the first rail running face (230) and the fourth rail running face (245) being oriented parallel to one another,
- and/or
- the second rail running face (235) and the third rail running face (240) being oriented parallel to one another.

11. Linear transport system (10) according to one of the preceding claims,
- the conveying device (25) comprising a tensioning means (300),
- the tensioning means (300) being configured to provide a tensioning force (F_{S}),
- the first running roller (145) and the second running roller (150) being pressed onto the running rail (20) by means of the tensioning force (F_{S}).

12. The linear transport system (10) according to one of the preceding claims,
- the first rotary bogie (95) comprising a first rotary bogie section (115), a second rotary bogie section (120) and a third rotary bogie section (125),
- the first running roller (145) being mounted on the first rotary bogie section (115) such that it can be rotated about a first rotational axis (170), and the second running roller (150) being mounted on the second rotary bogie section (120) such that it can be rotated about a second rotational axis (175),
- the third rotary bogie section (125) being arranged between the first rotary bogie section (115) and the second rotary bogie section (120), and connecting the first rotary bogie section (115) to the second rotary bogie section (120),
- the first rotary bogie section (115) and the second rotary bogie section (120) being arranged in an inclined manner with respect to one another, and extending on a common side of the third rotary bogie section (125).

13. Linear transport system (10) according to one of the preceding claims,
- the conveying device (25) comprising a second guide unit (80) and a coupling unit (85),
- the first guide unit (75) and the second guide unit (80) being of identical configuration,
- the coupling unit (85) coupling the first guide unit (75) mechanically to the second guide unit (80).

14. Linear transport system (10) according to one of the preceding claims,
- having a drive device (30),
- the drive device (30) comprising a linear motor (51) with a stator (55), a magnet arrangement (70) and a control unit (60),
- the magnet arrangement (70) being coupled to the first guide unit (75),
- the stator (55) comprising a multiplicity of coils (65) which can be energized separately,
- the coils (65) being connected electrically to the control unit (60),
- the control unit (60) being configured to control a defined number of the coils (65) in such a way that the defined number of coils (65) provide a travelling magnetic field for magnetically coupling the magnet arrangement (70) to the stator (55), in order to move the conveying device (25),
- the coils (65) being arranged offset with respect to the running rail (20), and the magnet arrangement (70) being arranged offset with respect to the first rotary bogie (95), and the running rail (20) guiding the movement of the conveying device (25).

## Revendications

1. Système de transport linéaire (10) pour le transport d'un objet (15),
- le système de transport linéaire (10) comprenant au moins un rail de roulement fixe (20) et au moins un dispositif de transport mobile (25),
- le dispositif de transport (25) comprenant une première unité de guidage (75) avec un premier galet de roulement (145), un deuxième galet de roulement (150) et une première sellette rotative (95),
- le premier galet de roulement (145) et le deuxième galet de roulement (150) étant supportés de manière rotative au niveau de la première sellette rotative (95) et s'appliquant sur le rail de roulement (20),
- le rail de roulement (20) présentant un axe longitudinal de rail (260) s'étendant dans la direction longitudinale,
- la première sellette rotative (95) étant supportée de manière à pouvoir tourner autour d'un axe de sellette rotative (280),
l'axe de sellette rotative (280) étant disposé de manière inclinée par rapport à l'axe longitudinal de rail (260), la première unité de guidage (75) comprenant un troisième galet de roulement (180) et un quatrième galet de roulement (185), les galets de roulement (145, 150, 180, 185) s'appuyant des deux côtés du rail de roulement (20),
**caractérisé en ce que**
- la première unité de guidage (75) comprend une deuxième sellette rotative (100),
- le troisième galet de roulement (180) et le quatrième galet de roulement (185) étant supportés de manière à pouvoir tourner au niveau de la deuxième sellette rotative (100) et s'appliquant sur le rail de roulement (20),
- le rail de roulement (20) étant disposé entre la première sellette rotative (95) et la deuxième sellette rotative (100),
- la deuxième sellette rotative (100) étant disposée à l'opposé de la première sellette rotative (95) et étant supportée de manière à pouvoir tourner autour d'un axe de sellette rotative supplémentaire (281),
- l'axe de sellette rotative supplémentaire (281) étant disposé de manière inclinée par rapport à l'axe longitudinal de rail (260).

2. Système de transport linéaire selon la revendication 1, dans lequel
- l'axe de sellette rotative (280) et l'axe de sellette rotative (281) sont orientés parallèlement l'un à l'autre.

3. Système de transport linéaire (10) selon la revendication 1 ou 2, dans lequel
- les premier à quatrième galets de roulement (145, 150, 180, 185) sont disposés ensemble suivant un agencement en X sur le rail de roulement (20).

4. Système de transport linéaire (10) selon l'une quelconque des revendications précédentes, dans lequel
- sur la première sellette rotative (95), le premier galet de roulement (145) est supporté de manière à pouvoir tourner autour d'un premier axe de rotation (170) et le deuxième galet de roulement (150) est supporté de manière à pouvoir tourner autour d'un deuxième axe de rotation (175),
- l'axe de sellette rotative (280) est disposé de manière inclinée par rapport au premier axe de rotation (170) et/ou au deuxième axe de rotation (175),
- l'axe de sellette rotative (280) et le premier axe de rotation (170) et/ou le deuxième axe de rotation (175) sont disposés dans un plan commun.

5. Système de transport linéaire (10) selon l'une quelconque des revendications 1 à 4, dans lequel
- la première unité de guidage (75) comprend une portion de liaison de sellette rotative (400),
- la portion de liaison de sellette rotative (400) est guidée devant le rail de guidage (20) et accouple la première sellette rotative (95) à la deuxième sellette rotative (100) de telle sorte que l'axe de sellette rotative (280) et l'axe de sellette rotative supplémentaire (281) soient superposés.

6. Système de transport linéaire (10) selon la revendication 5, dans lequel la portion de liaison de sellette rotative (400), la première sellette rotative (95) et la deuxième sellette rotative (100) sont réalisées d'une seule pièce et dans le même matériau.

7. Système de transport linéaire (10) selon l'une quelconque des revendications précédentes, dans lequel
- le rail de roulement (20) présente une première surface de roulement de rail (230), une deuxième surface de roulement de rail (235), une troisième surface de roulement de rail (240) et une quatrième surface de roulement de rail (245),
- la première surface de roulement de rail (230) est disposée de manière inclinée obliquement par rapport à la deuxième surface de roulement de rail (235),
- la première surface de roulement de rail (230) et la deuxième surface de roulement de rail (235) sont opposées l'une à l'autre,
- le premier galet de roulement (145) roule sur la première surface de roulement de rail (230) et le deuxième galet de roulement (150) roule sur la deuxième surface de roulement de rail (235),
- le troisième galet de roulement (180) roule sur la troisième surface de roulement de rail (240) et le quatrième galet de roulement (185) roule sur la quatrième surface de roulement de rail (245),
- la troisième surface de roulement de rail (240) est disposée de manière inclinée obliquement par rapport à la quatrième surface de roulement de rail (245),
- la troisième surface de roulement de rail (240) et la quatrième surface de roulement de rail (245) sont opposées l'une à l'autre,
- la troisième surface de roulement de rail (240) est disposée sur un côté du rail de roulement (20) opposé à la première surface de roulement de rail (230),
- la quatrième surface de roulement de rail (245) est disposée sur un côté opposé à la deuxième surface de roulement de rail (235).

8. Système de transport linéaire (10) selon la revendication 7, dans lequel
- les galets de roulement (145, 150, 155, 160) présentent, du côté de la périphérie, à chaque fois une surface de roulement (160, 165, 186, 187),
- les galets de roulement (145, 150, 155, 160) présentent à chaque fois une ligne de contact (250, 255, 265, 270) avec la surface de roulement de rail associée (230, 235, 240, 245),
- les surfaces de roulement de rail (230, 235, 240, 245) sont à chaque fois disposées sur le rail de roulement (20) de telle sorte que les lignes de contact (250, 255, 265, 270) s'étendent à chaque fois latéralement à distance d'un axe longitudinal de rail (260) du rail de roulement (20).

9. Système de transport linéaire selon la revendication 8, dans lequel
- les lignes de contact (250, 255, 265, 270) sont disposées dans un plan commun,
- l'axe longitudinal de rail (260) est disposé perpendiculairement au plan.

10. Système de transport linéaire (10) selon l'une quelconque des revendications 7 à 9, dans lequel
- la première surface de roulement de rail (230) et la deuxième surface de roulement de rail (235) sont disposées sur un premier côté (105) du rail de roulement (20) et la troisième surface de roulement de rail (240) et la quatrième surface de roulement de rail (245) sont disposées sur un deuxième côté (110) du rail de roulement (20) opposé au premier côté (105),
- la première surface de roulement de rail (230) et la quatrième surface de roulement de rail (245) sont orientées parallèlement l'une à l'autre,
et/ou
- la deuxième surface de roulement de rail (235) et la troisième surface de roulement de rail (240) sont orientées parallèlement l'une à l'autre.

11. Système de transport linéaire (10) selon l'une quelconque des revendications précédentes, dans lequel
- le dispositif de transport (25) comprend un moyen de serrage (300),
- le moyen de serrage (300) est réalisé de manière à fournir une force de serrage (F_{S}),
- le premier galet de roulement (145) et le deuxième galet de roulement (150) sont pressés sur le rail de roulement (20) au moyen de la force de serrage (F_{S}).

12. Système de transport linéaire (10) selon l'une quelconque des revendications précédentes, dans lequel
- la première sellette rotative (95) comprend une première portion de sellette rotative (115), une deuxième portion de sellette rotative (120) et une troisième portion de sellette rotative (125),
- le premier galet de roulement (145) est supporté sur la première portion de sellette rotative (115) de manière à pouvoir tourner autour d'un premier axe de rotation (170) et le deuxième galet de roulement (150) est supporté sur la deuxième portion de sellette rotative (120) de manière à pouvoir tourner autour d'un deuxième axe de rotation (175),
- la troisième portion de sellette rotative (125) est disposée entre la première portion de sellette rotative (115) et la deuxième portion de sellette rotative (120) et relie la première portion de sellette rotative (115) à la deuxième portion de sellette rotative (120),
- la première portion de sellette rotative (115) et la deuxième portion de sellette rotative (120) sont disposées de manière inclinée l'une par rapport à l'autre et s'étendent sur un côté commun de la troisième portion de sellette rotative (125).

13. Système de transport linéaire (10) selon l'une quelconque des revendications précédentes, dans lequel
- le dispositif de transport (25) comprend une deuxième unité de guidage (80) et une unité d'accouplement (85),
- la première unité de guidage (75) et la deuxième unité de guidage (80) sont réalisées de manière identique,
- l'unité d'accouplement (85) accouple mécaniquement la première unité de guidage (75) à la deuxième unité de guidage (80).

14. Système de transport linéaire (10) selon l'une quelconque des revendications précédentes,
- présentant un dispositif d'entraînement (30), dans lequel
- le dispositif d'entraînement (30) comprend un moteur linéaire (51) avec un stator (55), un agencement magnétique (70) et un appareil de commande (60),
- l'agencement magnétique (70) est accouplé à la première unité de guidage (75),
- le stator (55) comprend une pluralité de bobines (65) pouvant être alimentées en courant séparément,
- les bobines (65) sont connectées électriquement à l'appareil de commande (60),
- l'appareil de commande (60) est réalisé de manière à commander un nombre défini des bobines (65) de telle sorte que le nombre défini de bobines (65) fournisse un champ magnétique progressif pour l'accouplement magnétique de l'agencement magnétique (70) au stator (55), afin de déplacer le dispositif de transport (25),
- les bobines (65) sont disposées de manière décalée par rapport au rail de roulement (20) et l'agencement magnétique (70) est disposé de manière décalée par rapport à la première sellette rotative (95) et le rail de roulement (20) guide le dispositif de transport (25) dans son déplacement.
